# EUROPÄISCHE PATENTSCHRIFT

(11) **EP 4 632 430 B1**
(45) Veröffentlichungstag und Bekanntmachung des Hinweises auf die Patenterteilung: **18.02.2026**
(21) Anmeldenummer: 24169309.2
(22) Anmeldetag: 09.04.2024
(51) Int. Cl.: G01S 17/89, G01S 17/894, G01S 17/931, G01S 7/497, G01S 7/4863, G01S 7/4865, G01S 7/487

(54) **OPTISCHER SENSOR**
OPTICAL SENSOR
CAPTEUR OPTIQUE

(43) Veröffentlichungstag der Anmeldung: 15.10.2025
(73) Patentinhaber: SICK AG, 79183 Waldkirch (DE)
(72) Erfinder: Schneider, Georg, 20535 Hamburg (DE); Erdmann, Jennifer, 22969 Witzhave (DE)
(74) Vertreter: Manitz Finsterwald Patent- und Rechtsanwaltspartnerschaft mbB

(56) Entgegenhaltungen:
- EP-A1- 3 591 426
- US-A1- 2021 088 634
- US-A1- 2024 067 094

## Beschreibung

Die Erfindung betrifft einen optischen Sensor mit einer Sendeeinheit, einer Empfangseinheit und einer Steuerungs- und Auswertungseinheit. Ferner betrifft die Erfindung ein Sensorsystem und ein Verfahren zum Kalibrieren eines optischen Sensors.

Bei der Auswertung von Messsignalen, beispielsweise eines Sensors, ist es generell erforderlich, echte Messsignale, welche die tatsächliche Messgröße repräsentieren, von solchen Signalen unterscheiden zu können, die beispielsweise durch zufällige Ereignisse, Ausreißer oder Störungen, aber nicht durch die tatsächlich zu messende Größe hervorgerufen werden. Es sind Filtermethoden bekannt, mit denen sogenannte falsch-positive Signale aus erfassten Messsignalen herausgefiltert werden, um diese von den echten Messsignalen zu trennen, die auch als richtig-positive Signale bezeichnet werden.

Mit einem Lidar-System kann beispielsweise der Abstand zwischen einem Objekt und dem Lidar-System gemessen werden, indem die Laufzeit von Laserpulsen, die das Lidar-System aussendet, ermittelt wird. Zur Messung der Laufzeit werden diejenigen Laserpulse, die an dem Objekt reflektiert werden, mittels einer Empfangseinheit des Lidar-Systems erfasst. Eine solche Empfangseinheit des Lidar-Systems ist jedoch Umgebungsbedingungen ausgesetzt, die beispielsweise Fremdlicht, wie etwa Sonnenlicht, umfassen, das ein gewisses Hintergrundniveau bzw. einen Offset in den Messsignalen des Lidar-Systems bewirkt. Außerdem sind die Messsignale, welche die Empfangseinheit des Lidar-Systems ausgibt, generell mit einem gewissen Rauschen behaftet, dessen Intensität beispielsweise von der Umgebungstemperatur abhängt.

Wenn die bekannten Filtermethoden zum Beseitigen falsch-positiver Messsignale auf ein solches Lidar-System angewendet werden, wird häufig ein Mittelwert über Messsignale gebildet, der einem Hintergrundniveau entspricht und somit beispielsweise den Beitrag des Fremdlichts umfasst. Anschließend wird eine Differenz festgelegt, um die ein Messsignal oberhalb des Mittelwerts liegen muss, um als echtes Messsignal bzw. richtig-positives Signal erkannt zu werden. Eine solche geeignete Differenz wird beispielsweise anhand eines vordefinierten Vielfachen der Standardabweichung der erfassten Messsignale definiert. Alternativ kann auch eine Mahalanobis-Distanz als Differenz zum Mittelwert verwendet werden.

Solche Filtermethoden, die eine zuvor festgelegte Distanz zwischen einem echten Messsignal und einem Mittelwert verwenden, beruhen jedoch explizit oder implizit auf der Annahme, dass das Rauschen des Messsignals eine bestimmte Verteilung annimmt, beispielsweise eine Poissonverteilung, eine Binomialverteilung oder eine Normalverteilung. Diese Annahme ist entweder explizit in der Modellierung des Rauschens vorhanden, oder sie wird implizit durch die Berechnung der Standardabweichung berücksichtigt, die eine Normalverteilung voraussetzt.

**In** der Praxis folgt das Rauschen der Messsignale jedoch keiner bestimmten Verteilung exakt. Dadurch hängt die Qualität der Filtermethode von der Güte der Annäherung an die angenommene Verteilung ab. Dies kann dazu führen, dass beispielsweise in unterschiedlichen Umgebungsbedingungen, die beispielsweise bei Lidar-Systemen mit unterschiedlichen Hintergrundniveaus und unterschiedlichen Rauschintensitäten verbunden sind, die Qualität der Filterung falsch-positiver Signale unterschiedlich ist. Die Annahme, dass das Rauschen einer bestimmten Verteilung folgt, ist beispielsweise bei einem Lidar-System für unterschiedliche Größen des Hintergrundniveaus aufgrund der sich unterscheidenden Umgebungsbedingungen unterschiedlich gut erfüllt. Daher ist die sogenannte Falsch-Positiv-Rate (FPR), d.h. der Anteil bzw. die Wahrscheinlichkeit von nicht erkannten falsch-positiven Messsignalen bezogen auf die Gesamtheit der Messsignale, für unterschiedliche Umgebungsbedingungen beispielsweise eines Lidar-Systems nicht konstant.

Um sicherzustellen, dass unabhängig von den Umgebungsbedingungen eine bestimmte Falsch-Positiv-Rate erreicht wird, beispielsweise von 1%, wird bei bekannten Filtermethoden häufig eine eher konservative bzw. relativ groß gewählte Differenz bezogen auf den Mittelwert verwendet, die ein echtes bzw. richtig-positives Messsignal aufzuweisen hat. Dadurch können jedoch im Umkehrschluss unnötig viele richtig-positive bzw. echte Messsignale aus den erfassten Messsignalen herausgefiltert werden, insbesondere dann, wenn das Messsignal bei einem relativ hohen Hintergrundniveau ein eher mäßiges Signal-Rauschverhältnis aufweist.

In der US 2021/0088634 A1 ist ein optischer Sensor mit Einzelphotonen-Avalanchedioden beschrieben, die in zwei unterschiedlichen Modi betrieben werden, von denen der erste Modus einen Betrieb in einem linearen Bereich unterhalb der Durchbruchspannung der Avalanchedioden vorsieht. Ein Intensitätsniveau des einfallenden Lichts wird anhand eines Stroms über die Avalanchedioden gemessen, um anhand der so ermittelten Intensität ein Überspannungsniveau auszuwählen, das an die Avalanchedioden in dem zweiten Modus auszuwählen, in dem die Avalanchedioden oberhalb der Durchbruchspannung in einem sogenannten Detektionsmodus betrieben werden.

Die US 2024/0067094 A1 beschreibt ein System mit einer getakteten Kamera und einer Kalibrierungslichtquelle.

In der EP 3 591 426 A1 ist ein 3D-Überwachungssensor beschrieben.

Eine Aufgabe der Erfindung besteht darin, einen optischen Sensor, ein Sensorsystem und ein Verfahren zum Kalibrieren eines optischen Sensors zu schaffen, bei denen falsch-positive Messsignale unabhängig von den Umgebungsbedingungen des optischen Sensors auf zuverlässige Weise erkannt werden.

Diese Aufgabe wird durch einen optischen Sensor, ein Sensorsystem und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Der optische Sensor umfasst eine Sendeeinheit, eine Empfangseinheit sowie eine Steuerungs- und Auswertungseinheit. Die Sendeeinheit ist zum Emittieren eines optischen Sendesignals in die Umgebung des optischen Sensors vorgesehen, während die Empfangseinheit ausgebildet ist, einen reflektierten oder remittierten Teil des Sendesignals zu erfassen. Die Steuerungs- und Auswertungseinheit ist ausgebildet, vor einer Betriebsphase des optischen Sensors einen Kalibrierungsdatensatz zu empfangen und zu speichern. Der Kalibrierungsdatensatz umfasst eine Vielzahl von Signalschwellenwerten, die einem jeweiligen Hintergrundniveau zugeordnet sind, das einer jeweiligen vorbestimmten Lichtintensität entspricht.

Die Steuerungs- und Auswertungseinheit ist ferner ausgebildet, während der Betriebsphase des optischen Sensors Betriebsmesssignale bei aktivierter Sendeeinheit von der Empfangseinheit des optischen Sensors zu empfangen, ein momentanes Hintergrundniveau zu ermitteln und anhand des momentanen Hintergrundniveaus einen der Signalschwellenwerte des Kalibrierungsdatensatzes auszuwählen. Dadurch ist die Steuerungs- und Auswertungseinheit in der Lage, während der Betriebsphase Ausgangssignale, die von den Betriebsmesssignalen abgeleitet sind, dann als ungültige Signale zu identifizieren, wenn das jeweilige Ausgangssignal kleiner als der ausgewählte Signalschwellenwert ist.

Wenn der optische Sensor beispielsweise als optischer Scanner oder Laserscanner ausgestaltet ist, können Objekte in der Umgebung des optischen Sensors detektiert und deren jeweilige Abstände bezogen auf den optischen Sensor ermittelt werden. Die Sendeeinheit kann in diesem Fall einen Laser umfassen, der kurze Pulse in die Umgebung des Sensors emittiert.

Das Ausgangssignal wird von den Betriebsmesssignalen abgeleitet, indem beispielsweise Betriebsmesssignale gezählt werden, die einem vorbestimmten Intervall für eine Laufzeit des an einem Objekt zurückgestreuten oder reflektierten Sendesignals zugeordnet werden, bis das zurückgestreute oder reflektierte Sendesignal die Empfangseinheit erreicht. Solche Intervalle der Laufzeit können ferner jeweiligen Intervallen für Distanzen zwischen dem optischen Sensor und dem jeweiligen Objekt, d.h. sogenannten Distanzbins, zugeordnet werden. Das Ausgangsignal kann in diesem Fall einen Zählwert pro Distanzbin umfassen.

Der Kalibrierungsdatensatz, der von der Steuerungs- und Auswertungseinheit empfangen und gespeichert wird, wird in einer Kalibrierungsphase des optischen Sensors generiert, in der beispielsweise die Sendeeinheit des optischen Sensors deaktiviert ist und die Empfangseinheit die jeweilige vorbestimmte Lichtintensität empfängt. Es ist jedoch nicht unbedingt notwendig, die Sendeeinheit während der Kalibrierungsphase zu deaktivieren. Voraussetzung für die Erzeugung des Kalibrierungsdatensatzes ist lediglich, dass kein Licht der Sendeeinheit direkt oder indirekt, d.h. durch Streuung, Reflexion oder Remission, auf die Empfangseinheit fällt. Mit anderen Worten wird der Kalibrierungsdatensatz erstellt, ohne dass von der Sendeeinheit emittiertes und in der Umgebung des optischen Sensors gestreutes, reflektiertes oder remittiertes Licht auf die Empfangseinheit des optischen Sensors fällt. Dies kann beispielsweise auch dadurch erreicht werden, dass die Sendeeinheit in der Kalibrierungsphase geeignet abgedeckt, abgedunkelt oder ausgeblendet wird.

Der Kalibrierungsdatensatz umfasst nicht nur einen Signalschwellenwert, sondern eine Vielzahl von Signalschwellenwerten, die einem jeweiligen Hintergrundniveau im Betrieb des optischen Sensors zugeordnet sind. Der jeweilige Signalschwellenwert, anhand dessen entschieden wird, ob das Ausgangssignal ein ungültiges oder ein gültiges Signal ist, d.h. ein falsch-positives Signal oder ein richtig-positives Signal, hängt somit von dem aktuellen bzw. momentanen Hintergrundniveau während der Betriebsphase des optischen Sensors ab und wird dem Kalibrierungsdatensatz entnommen.

Der Kalibrierungsdatensatz kann ferner derart ermittelt werden, dass Lichtintensitäten festgelegt bzw. vorbestimmt werden, die den jeweiligen Hintergrundniveaus entsprechen bzw. diesen zugeordnet sind. Die vorbestimmten Lichtintensitäten können in Übereinstimmung mit zu erwartenden bzw. für die Betriebsphase relevanten Hintergrundniveaus ausgewählt werden, um die Empfangseinheit mit diesen vorbestimmten Lichtintensitäten zu beleuchten und die Signalschwellenwerte anhand der von der Empfangseinheit erfassten Signale beispielsweise bei deaktivierter Sendeeinheit zu ermitteln.

Die Signalschwellenwerte dienen letztlich dazu, das Ausgangssignal bezüglich falsch-positiver Signale zu filtern, die kleiner als der jeweilige Signalschwellenwert für das momentane Hintergrundniveau sind. Als ungültig identifizierte Ausgangssignale können vor einer Ausgabe entweder entfernt oder markiert werden.

Das momentane Hintergrundniveau kann entweder anhand momentaner Betriebsmesssignale bei aktivierter Sendeeinheit ermittelt werden, indem beispielsweise ein Mittelwert oder Median über alle Distanzbins oder einen Teil der Distanzbins gebildet wird, in welchem mit hoher Wahrscheinlichkeit kein Signal oder Echo auftritt, das von einem tatsächlichen Objekt erzeugt wird. Alternativ kann unmittelbar nach einer jeweiligen Messung mit aktivierter Sendeeinheit jeweils eine zweite Messung bei deaktivierter Sendeeinheit erfolgen, um das momentane Hintergrundniveau anhand dieser zweiten Messung zu ermitteln. In diesem Fall umfassen die Betriebsmesssignale sowohl die erste Messung mit aktivierter Sendeeinheit als auch die zweite Messung mit deaktivierter Sendeeinheit, da beide Messungen während der Betriebsphase des optischen Sensors durchgeführt werden. Die Steuerungs- und Auswertungseinheit ermittelt das momentane Hintergrundniveau somit in beiden Fällen anhand von Betriebsmesssignalen, die während der Betriebsphase erfasst werden.

Die jeweiligen Signalschwellenwerte können derart festgelegt sein, dass eine definierte und konstante Falsch-Positiv-Rate (FPR) unabhängig vom jeweiligen Hintergrundniveau bzw. unabhängig von den jeweiligen Umgebungsbedingungen des optischen Sensors erreicht wird. Umgekehrt kann somit zunächst eine gewünschte FPR festgelegt werden, beispielsweise 1%, anhand derer wiederum die jeweiligen Schwellenwerte für die vorbestimmten Lichtintensitäten bzw. die entsprechenden Hintergrundniveaus ermittelt werden. Eine vorbestimmte oder gewünschte FPR kann somit die Bedingungen für die Ermittlung der Schwellenwerte festlegen.

Die jeweiligen Signalschwellenwerte beruhen folglich nicht auf Annahmen bezüglich Verteilungen für das Rauschen der Kalibrierungsmesssignale. Stattdessen sind die Signalschwellenwerte zwar von der tatsächlichen Rauschverteilung abhängig, ihre Ermittlung erfordert jedoch keinerlei Kenntnis über die Form der tatsächlichen Rauschverteilung. Mit anderen Worten sind für die Ermittlung der Signalschwellenwerte keine Modellvorstellungen für die Verteilung, die Form und/oder den zeitlichen Verlauf der Kalibrierungsmesssignale notwendig.

In der Betriebsphase des optischen Sensors können daher systematische Fehler vermieden werden, die dadurch bedingt sein können, dass die jeweilige Falsch-Positiv-Rate unterschiedliche Werte bei unterschiedlichen Hintergrundniveaus annimmt, wenn beispielsweise ein konstantes Vielfaches der Standardabweichung der Betriebsmesssignale oder eines Ausgangssignals verwendet wird, das von den Betriebsmesssignalen abgeleitet ist. Stattdessen kann ein Ausgangssignal zuverlässig als ungültiges Signal bzw. falsch-positives Signal identifiziert werden, d.h. mit einer konstanten Falsch-Positiv-Rate unabhängig vom jeweiligen Hintergrundniveau bzw. unabhängig von den Umgebungsbedingungen. Dadurch wird insgesamt die Zuverlässigkeit bei der Filterung der Ausgangssignale verbessert. Umgekehrt erfolgt kein unnötiges Herausfiltern von richtig-positiven Ausgangssignalen, da die jeweiligen Signalschwellenwerte an die jeweiligen Hintergrundniveaus angepasst sind und der passende Signalschwellenwert ausgewählt wird, der dem momentanen Hintergrundniveau entspricht.

Ferner ist der optische Sensor ausgebildet, während der Kalibrierungsphase vor der Betriebsphase mit einer Kalibrierungseinrichtung in Verbindung zu stehen, die eine Beleuchtungseinheit aufweist, welche die Empfangseinheit mit der jeweiligen vorbestimmten Lichtintensität beleuchtet, der das jeweilige Hintergrundniveau entspricht. Die Steuerungs- und Auswertungseinheit ist ferner ausgebildet, während der Kalibrierungsphase für jede vorbestimmte Lichtintensität Kalibrierungsmesssignale der Empfangseinheit zu erfassen, so dass eine Verarbeitungseinheit in der Lage ist, den Kalibrierungsdatensatz anhand der Kalibrierungsmesssignale zu generieren.

Die Verarbeitungseinheit kann Teil der Kalibrierungseinrichtung sein, sie kann aber gleichzeitig auch in die Steuerungs- und Auswertungseinheit des optischen Sensors integriert sein. In diesem Fall ist die Verarbeitungseinheit nur während der Kalibrierungsphase des optischen Sensors aktiv.

In der Kalibrierungsphase simuliert die Kalibrierungseinrichtung für die Empfangseinheit des optischen Sensors folglich mittels der Beleuchtungseinheit anhand der vorbestimmten Lichtintensitäten jeweilige Hintergrundniveaus und das entsprechende Rauschen, die im Betrieb des optischen Sensors beispielsweise durch Fremdlicht und andere Einflüsse in jeweiligen Umgebungsbedingungen erzeugt werden. Zur Festlegung der vorbestimmten Lichtintensitäten können zunächst relevante Hintergrundniveaus für den Betrieb des optischen Sensors ermittelt werden, die beispielsweise von einer geplanten Einsatzumgebung des optischen Sensors abhängen und einen möglichen Messbereich für den optischen Sensor abdecken können. Mit anderen Worten können zunächst sämtliche relevanten Hintergrundniveaus für den Betrieb des optischen Sensors ermittelt werden.

Anschließend werden die vorbestimmten Lichtintensitäten für die Kalibrierungsphase des optischen Sensors derart festgelegt, dass sie den ermittelten relevanten Hintergrundniveaus entsprechen. Aufgrund der deaktivierten Sendeeinheit des optischen Sensors während der Kalibrierungsphase repräsentieren die Kalibrierungsmesssignale ausschließlich ein jeweiliges Hintergrundniveau für die jeweils vorbestimmte Lichtintensität und das entsprechende Rauschen, d.h. Schwankungen um das jeweilige Hintergrundniveau.

Von den Kalibrierungsmesssignalen können auf ähnliche Weise Signale abgeleitet werden, wie dies vorstehend für die Ausgangssignale beschrieben ist, die von den Betriebsmesssignalen abgeleitet sind. Konkret können Kalibrierungsmesssignale, die bezüglich ihrer Größe in einem bestimmten Intervall liegen, gezählt werden und die Anzahlen den jeweiligen sogenannten Distanzbins zugeordnet werden. Die Signalschwellenwerte können anhand dieser abgeleiteten Signale ermittelt werden.

Ein jeweiliger Signalschwellenwert für die jeweilige vorbestimmte Lichtintensität kann beispielsweise anhand eines oder mehrerer Maxima der von den Kalibrierungsmesssignalen abgeleiteten Signale festgelegt werden. Das Ausgangssignal, das von den Betriebsmesssignalen abgeleitet ist, wird nur dann als gültiges Signal identifiziert, wenn es für das entsprechende momentane Hintergrundniveau größer als diese Maxima der Kalibrierungsmesssignale bzw. gleich diesen ist, d.h. größer als der entsprechende Signalschwellenwert für das momentane Hintergrundniveau oder gleich diesem.

Darüber hinaus ist der optische Sensor für eine zeitkorrelierte Einzelphotonenzählung (TCSPC, von engl.: Time Correlated Single Photon Counting) ausgebildet. Ferner ist die Steuerungs- und Auswertungseinheit ausgebildet, sowohl für die Kalibrierungsmesssignale als auch für die Betriebsmesssignale jeweilige Histogramme der zeitkorrelierten Einzelphotonenzählung (TCSPC-Histogramme) zu erzeugen.

Ein optischer Sensor mit zeitkorrelierter Einzelphotonenzählung sendet beispielsweise periodisch Lichtpulse aus, die typischerweise einige Nanosekunden lang sind und einen Startzeitpunkt einer jeweiligen Messung festlegen. Während eines Zeitintervalls bis zum nächsten Lichtpuls wird das Licht, das beispielsweise an einem Objekt in der Umgebung des optischen Sensors reflektiert oder zurückgestreut wird, mittels der Empfangseinheit des optischen Sensors detektiert. Das Zeitintervall zwischen zwei Lichtpulsen, welche die Sendeeinheit emittiert, kann in eine Vielzahl von kurzen Zeitabschnitten unterteilt werden, die beispielsweise 500 ps lang sind. Jedem Zeitabschnitt kann ein Zeitpunkt zugeordnet werden, der einem zeitlichen Abstand zum Startzeitpunkt der Messung entspricht, zu dem zuletzt ein Lichtpuls von der Sendeeinheit emittiert wurde.

In Abhängigkeit von dem Abstand zu dem Objekt in der Umgebung des optischen Sensors erreicht der reflektierte oder zurückgestreute Lichtpuls die Empfangseinheit des optischen Sensors zu unterschiedlichen Zeitpunkten. Mit anderen Worten weist der emittierte Lichtpuls in Abhängigkeit von dem Abstand des Objekts bis zum Nachweis in der Empfangseinheit unterschiedliche Laufzeiten auf. Die Empfangseinheit kann bei dem jeweiligen Nachweis eines reflektierten oder zurückgestreuten Lichtpulses ein elektrisches Signal erzeugen, das mittels eines Zeit-Digital-Wandlers (TDC, von Engl.: Time-to-Digital-Converter) einem der Zeitabschnitte innerhalb des Zeitintervalls zwischen zwei Lichtpulsen zugeordnet werden kann.

Wenn die Sendeeinheit des optischen Sensors eine Vielzahl von Lichtpulsen emittiert, können die elektrischen Signale bzw. Ereignisse, die durch reflektierte oder zurückgestreute Lichtpulse in der Empfangseinheit erzeugt werden und einem jeweiligen Zeitabschnitt zugeordnet werden, für die Vielzahl von emittierten Lichtpulsen gezählt werden. Die gezählten elektrischen Signale bzw. Ereignisse über den jeweiligen Zeitabschnitten bilden ein Histogramm der zeitkorrelierten Einzelphotonenzählung (TCSPC-Histogramm), das beispielsweise durch digitale Signale in einem Speicher der Steuerungs- und Auswertungseinheit repräsentiert werden kann. Da die Zeitabschnitte des TCSPC-Histogramms unterschiedlichen Laufzeiten der Lichtpulse bis zu einem Objekt in der Umgebung des optischen Sensors und damit unterschiedlichen Distanzen bezogen auf den optischen Sensor zugeordnet sind, entsprechen die Zeitabschnitte, die das Zeitintervall zwischen zwei jeweils zwei Lichtpulsen der Sendeeinheit unterteilen, jeweiligen Distanzen bezogen auf den optischen Sensor. Daher werden die Zeitabschnitte auch als sogenannte Distanzbins bezeichnet, und in einem TCSPC-Histogramm können Anzahlen bzw. Zählwerte über Distanzbins dargestellt werden.

Die jeweiligen TCSPC-Histogramme werden jedoch nicht nur in der Betriebsphase des optischen Sensors, sondern auch während der Kalibrierungsphase mittels der Kalibrierungsmesssignale erzeugt, d.h. ohne dass die Sendeeinheit des optischen Sensors aktiv in die Messung eingebunden ist. Die TCSPC-Histogramme können während der Kalibrierungsphase anhand der Kalibrierungsmesssignale auch ohne emittierte Lichtpulse der Sendeeinheit erzeugt werden, da die Beleuchtungseinheit der Kalibrierungseinrichtung die Empfangseinheit des optischen Sensors in der Kalibrierungsphase mit einer jeweils zeitlich konstanten Lichtintensität beleuchten kann, die beispielsweise dem zu erwartenden Fremdlicht unter einer jeweiligen Umgebungsbedingung während der Betriebsphase entsprechen kann.

Die TCSPC-Histogramme repräsentieren somit für die Kalibrierungsphase die von den Kalibrierungsmesssignalen abgeleiteten Signale, die zur Ermittlung der jeweiligen Signalschwellenwerte verwendet werden, und für die Betriebsphase die Ausgangssignale, die von den Betriebsmesssignalen abgeleitet sind. Diese Ausgangssignale werden jedoch anschließend mit den jeweiligen Signalschwellenwerten verglichen, um als gültiges oder ungültiges Signal identifiziert zu werden. Die gültigen Ausgangssignale können auch als Echos bezeichnet werden, da sie letztlich durch eine tatsächliche Reflexion oder Rückstreuung an einem Objekt hervorgerufen werden.

**In** der Kalibrierungsphase können der Hintergrundanteil und der Rauschanteil der jeweiligen TCSPC-Histogramme mittels der jeweiligen vorbestimmten Lichtintensität für das entsprechende Hintergrundniveau simuliert werden. Die jeweiligen Signalschwellenwerte für die Betriebsphase können somit anhand der TCSPC-Histogramme der Kalibrierungsphase auf direkte Weise ermittelt und sozusagen in den Histogrammen abgelesen werden. Zur Festlegung der jeweiligen Signalschwellenwerte können beispielsweise ein oder mehrere Maxima der TCSPC-Histogramme ermittelt werden, die in der Kalibrierungsphase für die jeweilige vorbestimmte Lichtintensität bzw. das entsprechende Hintergrundniveau erzeugt werden.

Die Steuerungs- und Auswertungseinheit ist ferner ausgebildet, während der Kalibrierungsphase des optischen Sensors jeweils eine Vielzahl von TCSPC-Histogrammen für jede vorbestimmte Lichtintensität zu erzeugen. Ferner ist die Verarbeitungseinheit ausgebildet, während der Kalibrierungsphase für jedes der TCSPC-Histogramme, die der jeweiligen vorbestimmten Lichtintensität zugeordnet sind, einen jeweiligen maximalen Zählwert bzw. Histogrammwert zu ermitteln, um eine statistische Verteilung der maximalen Zählwerte für die jeweilige vorbestimmte Lichtintensität zu erstellen, und die Signalschwellenwerte für die jeweiligen vorbestimmten Lichtintensitäten anhand dieser statistischen Verteilung zu ermitteln.

Da die jeweiligen Signalschwellenwerte somit von der statistischen Verteilung der maximalen Zählwerte einer Vielzahl von Histogrammen abhängen, kann die Bewertung der Betriebsmesssignale während der Betriebsphase des optischen Sensors auf zuverlässige Weise erfolgen, da ein gültiges Signal größer als der jeweilige Signalschwellenwert und damit größer als ein gewisser Anteil der maximalen Zählwerte in der statistischen Verteilung sein muss. Anstelle eines jeweiligen maximalen Zählwerts können auch mehrere Zählwerte verwendet werden, die beispielsweise dem größten, zweitgrößten, drittgrößten usw. Zählwert entsprechen.

Die Verarbeitungseinheit kann ferner ausgebildet sein, während der Kalibrierungsphase des optischen Sensors anhand der statistischen Verteilung jeweils eine kumulierte relative Häufigkeit der maximalen Zählwerte für jede vorbestimmte Lichtintensität zu ermitteln und die jeweiligen Signalschwellenwerte für die vorbestimmten Lichtintensitäten anhand der jeweiligen kumulierten relativen Häufigkeit zu ermitteln. Die kumulierte relative Häufigkeit kann beispielsweise in Abhängigkeit der maximalen Zählwerte dargestellt werden und kann somit eine effizient verwendbare Umformung der statistischen Verteilung darstellen.

Aus einer solchen Darstellung der kumulierten relativen Häufigkeit können die jeweiligen Signalschwellenwerte beispielsweise als diejenigen maximalen Zählwerte ermittelt werden, bei denen die jeweilige kumulierte relative Häufigkeit einen bestimmten Wert erreicht, beispielsweise 99%, so dass umgekehrt die kumulierte relative Häufigkeit für ungültige Ausgangssignale, die in der Betriebsphase nicht erkannt werden, lediglich 1 minus der kumulierten relativen Häufigkeit bei dem maximalen Zählwert beträgt, beispielsweise 1%.

Die Verarbeitungseinheit kann ferner ausgebildet sein, während der Kalibrierungsphase des optischen Sensors mindestens einen vorgegebenen Prozentanteil für falsch-positive bzw. ungültige Ausgangssignale zu verwenden, um die jeweiligen Signalschwellenwerte für das zugeordnete Hintergrundniveau anhand der jeweiligen kumulierten relativen Häufigkeit zu ermitteln. Bei einer solchen Ausführungsform kann somit die Falsch-Positiv-Rate anhand des vorgegebenen Prozentanteils für die falsch-positiven Ausgangssignale vorgegeben werden, so dass die jeweiligen Signalschwellenwerte für sämtliche Hintergrundniveaus der vorgegebenen Falsch-Positiv-Rate entsprechen. Mit anderen Worten können die jeweiligen Signalschwellenwerte anhand der jeweiligen kumulierten relativen Häufigkeit der maximalen Zählwerte derart ermittelt werden, dass der Anteil der gefilterten falsch-positiven Ausgangssignale, die somit als ungültige Ausgangssignale erkannt werden, unabhängig von den zugeordneten Hintergrundniveaus konstant ist.

Darüber hinaus kann die Verarbeitungseinheit zusätzlich ausgebildet sein, während der Kalibrierungsphase des optischen Sensors mehrere vorgegebene Prozentanteile, d.h. mehr als einen vorgegebenen Prozentanteil, für falsch-positive Ausgangssignale zu verwenden, um für jeden vorgegebenen Prozentanteil einen Satz jeweiliger Signalschwellenwerte für das zugeordnete Hintergrundniveau anhand der jeweiligen kumulierten relativen Häufigkeit zu ermitteln. Beispielsweise kann vorgegeben sein, dass 0,1%, 1%, 5% und 10% der Betriebsmesssignale als falsch-positive Ausgangssignale bzw. ungültige Ausgangssignale in der Betriebsphase nicht erkannt werden dürfen, so dass der vorgegebene Prozentanteil für zu filternde falsch-positive Ausgangssignale entsprechend 99,9%, 99%, 95% bzw. 90% beträgt. Entsprechende jeweilige Sätze der Signalschwellenwerte können dann entsprechend dem jeweiligen zugeordneten Hintergrundniveau anhand der jeweiligen kumulierten relativen Häufigkeit ermittelt bzw. als maximaler Zählwert mit diesem jeweiligen Prozentanteil aus der Verteilung der kumulierten relativen Häufigkeiten extrahiert werden.

In der Betriebsphase des optischen Sensors können die Betriebssignale anhand dessen validiert und markiert werden, ob sie beispielsweise oberhalb eines, zweier, dreier oder aller Signalschwellenwerte liegen, die dem momentane Hintergrundniveau während der Betriebsphase zugeordnet sind. Dies kann eine flexible Weiterverarbeitung von Ausgangssignalen des optischen Sensors ermöglichen, wenn beispielsweise Algorithmen, welche die Ausgangssignale des optischen Sensors weiterverarbeiten, eine unterschiedlich starke Filterung bezüglich falsch-positiver Ausgangssignale erfordern.

Die Verarbeitungseinheit kann ferner ausgebildet sein, während der Kalibrierungsphase des optischen Sensors den Kalibrierungsdatensatz in der Form mindestens einer Nachschlagetabelle zu erstellen, in der die jeweiligen Signalschwellenwerte und die zugeordneten Hintergrundniveaus enthalten sind. Mit anderen Worten kann das Ergebnis der Kalibrierungsphase als Nachschlagetabelle dargestellt werden, die während der Betriebsphase des optischen Sensors auf direkte Weise zur Bewertung der aktuellen Betriebsmesssignale eingesetzt werden kann. Falls mehrere Prozentanteile für falsch-positive Ausgangssignale vorgegeben werden, um jeweilige Sätze von Signalschwellenwerten für die zugeordneten Hintergrundniveaus zu ermitteln, kann die Steuerungs- und Auswertungseinheit während der Kalibrierungsphase mehrere Nachschlagetabellen erstellen, d.h. eine jeweilige Nachschlagetabelle für jeden der vorgegebenen Prozentanteile. Die Darstellung der Signalschwellenwerte mittels mindestens einer Nachschlagetabelle kann einen geringen computertechnischen Aufwand erfordern, beispielsweise wenig Speicherplatz und eine unkomplizierte rechentechnische Verarbeitung.

Zusätzlich kann die Verarbeitungseinheit ausgebildet sein, die Nachschlagetabelle durch eine analytische Funktion zu approximieren. Dadurch kann sich der computertechnische Aufwand während der Betriebsphase des optischen Sensors weiter verringern, um die ungültigen Ausgangssignale aus den Betriebsmesssignalen zu filtern. Die analytische Funktion kann zum Approximieren der Nachschlagetabelle einen oder mehrere Parameter umfassen und beispielsweise als Polynom oder Laurent-Reihe dargestellt werden. Die Approximation der Nachschlagetabelle mittels der analytischen Funktion kann insbesondere dann relevant sein, wenn eine große Anzahl möglicher Hintergrundniveaus in Betracht gezogen wird, wodurch der erforderliche Speicherbedarf für die mindestens eine Nachschlagetabelle und deren Verarbeitungszeit ansteigen können. Mittels der approximierten analytischen Funktion kann die während der Kalibrierungsphase gewonnene Information bezüglich der Signalschwellenwerte komprimiert gespeichert werden.

Gemäß einer weiteren Ausführungsform kann der optische Sensor als Lidar-Sensor mit zeitkorrelierter Einzelphotonenzählung (TCSPC) ausgebildet sein. Die Sendeeinheit kann bei dieser Ausführungsform einen Laser umfassen, der kurze Lichtpulse in die Umgebung des optischen Sensors emittiert und dabei diese Umgebung als scannender Laser abtasten kann. Die TCSPC-Histogramme, die bei einem solchen Lidar-Sensor mittels der Steuerungs- und Auswertungseinheit erzeugt werden, umfassen die vorstehend erwähnten Distanzbins, die einem jeweiligen Laufzeitintervall für die von dem Laser des Lidar-Sensors emittierten Lichtpulse entsprechen. Mit anderen Worten können die TCSPC-Histogramme eines solchen Lidar-Sensors jeweilige Zählwerte pro Distanzbin umfassen.

Die Verarbeitungseinheit kann für diese Ausführungsform ferner ausgebildet sein, in der Kalibrierungsphase des Lidar-Sensors für mehrere Abstandsbereiche innerhalb einer Reichweite des Lidar-Sensors einen jeweiligen Satz von Signalschwellenwerten zu ermitteln. Die jeweiligen Sätze von Signalschwellenwerten für die voneinander verschiedenen mehreren Abstandsbereiche können dadurch bedingt sein, dass der Lidar-Sensor mit zeitkorrelierter Einzelphotonenzählung eine distanzabhängige Rauschcharakteristik aufweist. Das Rauschen und das entsprechende Hintergrundniveau können somit für unterschiedliche Abstände von Objekten, an denen die Lichtpulse des Lidar-Sensors reflektiert werden können, unterschiedliche Werte aufweisen. Daher kann es sinnvoll sein, die Reichweite des Lidar-Sensors in mehrere Abstandsbereiche bzw. Gruppen nebeneinanderliegender Distanzbins zu unterteilen und für diese einen jeweiligen Satz von Signalschwellenwerten zu ermitteln. Diese mehreren Sätze von Signalschwellenwerte können anschließend in einer zweidimensionalen Nachschlagetabelle dargestellt und in einem Speicher des optischen Sensors zur Verwendung während dessen Betriebsphase hinterlegt werden.

Gemäß einer weiteren Ausführungsform kann die Empfangseinheit des optischen Sensors mehrere Gruppen von Pixeln umfassen, die jeweils unterschiedliche Charakteristiken bezüglich des Rauschens aufweisen können. Die Verarbeitungseinheit kann in diesem Fall ferner ausgebildet sein, in der Kalibrierungsphase des optischen Sensors für jede dieser Gruppen von Pixeln einen jeweiligen Satz von Signalschwellenwerten zu ermitteln.

Zu diesem Zweck kann die Verarbeitungseinheit während der Kalibrierungsphase des optischen Sensors die Beleuchtungseinheit der Kalibrierungseinrichtung bei deaktivierter Sendeeinheit des optischen Sensors derart steuern, dass die Beleuchtungseinheit die Empfangseinheit mit mehreren vorbestimmten Lichtintensitäten beleuchtet und für jede vorbestimmte Lichtintensität Kalibrierungsmesssignale der Empfangseinheit des optischen Sensors für jede Gruppe von Pixeln erfasst werden, um anhand der jeweiligen Kalibrierungsmesssignale pro Pixelgruppe einen jeweiligen Signalschwellenwert zu ermitteln und dem jeweiligen Signalschwellenwert pro Pixelgruppe einem der Hintergrundniveaus für den optischen Sensor zuzuordnen.

Das Ergebnis einer solchen Kalibrierungsphase, d.h. die jeweiligen Sätze von Signalschwellenwerten pro Pixelgruppe, können wiederum als zweidimensionale Nachschlagetabelle erstellt und als Kalibrierungsdatensatz in einem Speicher des optischen Sensors hinterlegt werden. Im Extremfall kann die Kalibrierung pro Pixel erfolgen, d.h. in einem solchen Fall kann jede Gruppe von Pixeln nur ein einziges Pixel umfassen.

Gemäß einer weiteren Ausführungsform kann die Steuerungs- und Auswertungseinheit ferner ausgebildet sein, während der Betriebsphase des optischen Sensors das momentane Hintergrundniveau als Mittelwert oder Median über zumindest einen vorbestimmten Anteil der Betriebsmesssignale zu ermitteln. Wenn der optische Sensor als Sensor mit zeitkorrelierter Einzelphotonenzählung ausgebildet ist, kann der Mittelwert über ein gesamtes TCSPC-Histogramm ermittelt werden, das während der Betriebsphase des optischen Sensors erfasst wird. Anhand eines solchen Mittelwerts kann das momentane Hintergrundniveau mit geringem Aufwand ermittelt werden. Alternativ kann das momentane Hintergrundniveau auch auf andere Weise ermittelt werden, beispielsweise durch eine separate Erfassung von Umgebungslicht bei kurzzeitig deaktivierter Sendeeinheit.

Weiterer Gegenstand der Erfindung ist ein Sensorsystem, das einen optischen Sensor, wie er vorstehend beschrieben ist, und eine Kalibrierungseinrichtung umfasst. Die Kalibrierungseinrichtung steht während einer Kalibrierungsphase des optischen Sensors mit dem optischen Sensor in Verbindung steht und ist ausgebildet, einen Kalibrierungsdatensatz für den optischen Sensor zu generieren. Der Kalibrierungsdatensatz umfasst eine Vielzahl von Signalschwellenwerten, die einem jeweiligen Hintergrundniveau zugeordnet sind, das einer jeweiligen vorbestimmten Lichtintensität entspricht.

Das Sensorsystem umfasst somit den vorstehend beschriebenen optischen Sensor und die ebenfalls vorstehend beschriebene Kalibrierungseinrichtung. Für das Sensorsystem gelten somit die Ausführungen zum optischen Sensor und der Kalibrierungseinrichtung entsprechend, dies gilt insbesondere hinsichtlich Vorteilen und bevorzugten Ausführungsformen.

Weiterer Gegenstand der Erfindung ist ein Verfahren zum Kalibrieren eines optischen Sensors, der eine Sendeeinheit und eine Empfangseinheit aufweist und während einer Kalibrierungsphase mit einer Kalibrierungseinrichtung in Verbindung steht. Das Verfahren umfasst, dass eine Lichtintensität einer Beleuchtungseinheit der Kalibrierungseinrichtung, beispielsweise bei deaktivierter Sendeeinheit des optischen Sensors, derart variiert wird, dass die Empfangseinheit mit mehreren vorbestimmten Lichtintensitäten beleuchtet wird. Für jede vorbestimmte Lichtintensität werden Kalibrierungsmesssignale der Empfangseinheit erfasst, anhand der Kalibrierungsmesssignale ein jeweiliger Signalschwellenwert ermittelt und der jeweilige Signalschwellenwert einem Hintergrundniveau für den optischen Sensor zugeordnet, welches der jeweiligen vorbestimmten Lichtintensität entspricht. Die Signalschwellenwerte werden für eine Betriebsphase des optischen Sensors mit aktivierter Sendeeinheit als Kalibrierungsdatensatz bereitgestellt, damit eine Steuerungs- und Auswertungseinheit des optischen Sensors während der Betriebsphase in der Lage ist, einen der Signalschwellenwerte des Kalibrierungsdatensatzes anhand eines momentanen Hintergrundniveaus auszuwählen, das anhand von Betriebsmesssignalen ermittelt wird, die mittels der Empfangseinheit des optischen Sensors während der Betriebsphase erfasst werden, und Ausgangssignale, die von den Betriebsmesssignalen bei aktivierter Sendeeinheit abgeleitet sind, dann als ungültiges Signal zu identifizieren, wenn das jeweilige Ausgangssignal kleiner als der ausgewählte Signalschwellenwert ist.

Das Verfahren kann mittels des vorstehend beschriebenen Sensorsystems ausgeführt werden. Für das Verfahren gelten somit die Ausführungen zum Sensorsystem, zum optischen Sensor und zur Kalibrierungseinrichtung entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Wie vorstehend erläutert ist, kann das momentane Hintergrundniveau während der Betriebsphase entweder direkt anhand von Messsignalen bei aktivierter Sendeeinheit des optischen Sensors oder dadurch ermittelt werden, dass unmittelbar nach einer jeweiligen Messung mit aktivierter Sendeeinheit jeweils eine zweite Messung bei deaktivierter Sendeeinheit erfolgt, welche das momentane Hintergrundniveau festlegt. Das momentane Hintergrundniveau wird somit in beiden Fällen anhand von Betriebsmesssignalen ermittelt, die während der Betriebsphase erfasst werden.

Ferner ist der optische Sensor für eine zeitkorrelierte Einzelphotonenzählung (TCSPC) ausgebildet. Sowohl für die Kalibrierungsmesssignale als auch für die Betriebsmesssignale werden jeweilige Histogramme der zeitkorrelierten Einzelphotonenzählung (TCSPC-Histogramme) erzeugt.

Für die Kalibrierungsmesssignale werden jeweils eine Vielzahl von TCSPC-Histogrammen bei jeder vorbestimmten Lichtintensität erzeugt. Für jedes dieser TCSPC-Histogramme, die der jeweiligen vorbestimmten Lichtintensität zugeordnet werden, wird ein jeweiliger maximaler Zählwert ermittelt, um eine statistische Verteilung der maximalen Zählwerte für die jeweilige vorbestimmte Lichtintensität zu ermitteln. Die Signalschwellenwerte für die jeweiligen vorbestimmten Lichtintensitäten werden schließlich anhand der statistischen Verteilung ermittelt.

Anhand der statistischen Verteilung kann ferner jeweils eine kumulierte relative Häufigkeit der maximalen Zählwerte für jede vorbestimmte Lichtintensität ermittelt werden. Die jeweiligen Signalschwellenwerte für die vorbestimmten Lichtintensitäten können ferner anhand der jeweiligen kumulierten relativen Häufigkeit ermittelt werden.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: einen erfindungsgemäßen optischen Sensor in einer Betriebsphase und in einer Kalibrierungsphase,
- Fig. 2: zwei unterschiedliche Szenarien, bei denen ein nahezu gleiches Hintergrundniveau, aber unterschiedliche Rauschcharakteristiken des optischen Sensors vorliegen, und
- Fig. 3: mehrere Diagramme, welche die Kalibrierungsphase des Sensorsystems veranschaulichen.

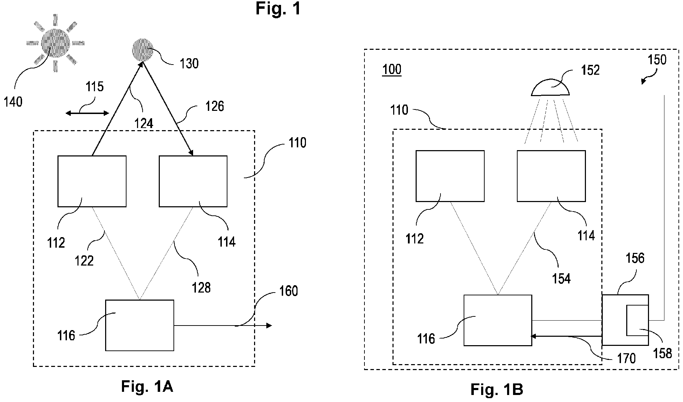

Fig. 1 zeigt eine schematische Darstellung eines optischen Sensors 110. Der optische Sensor 110 ist in Fig. 1A in einer Betriebsphase und in Fig. 1B in einer Kalibrierungsphase dargestellt, in welcher der optische Sensor 100 in ein Sensorsystem 100 eingebunden ist, das zusätzlich eine Kalibrierungseinrichtung 150 umfasst.

Der optische Sensor 110 ist als Lidar-Sensor ausgebildet, der das Messprinzip einer zeitkorrelierten Einzelphotonenzählung (TCSPC, von Engl.: Time Correlated Single Photon Counting) verwendet. Der optische Sensor bzw. Lidar-Sensor 110 umfasst daher eine Sendeeinheit 112 mit einem Laser, der periodisch Lichtpulse in die Umgebung des Lidar-Sensors 110 aussendet. Die periodischen Lichtpulse des Lasers der Sendeeinheit 112 sind in Fig. 1A schematisch als Sendesignal 124 dargestellt. Die periodischen Lichtpulse sind einige Nanosekunden lang, d.h. kürzer als beispielsweise 10 ns, und legen einen Startzeitpunkt einer jeweiligen Messung des Lidar-Sensors 110 fest.

Der Lidar-Sensor 110 umfasst ferner eine Empfangseinheit 114, die mit einem Array mit einer Vielzahl von Pixeln versehen ist. Die Empfangseinheit 114 detektiert diejenigen Lichtpulse 124, die an einem Objekt 130 in der Umgebung des Lidar-Sensors 110 reflektiert oder zurückgestreut werden und dementsprechend als reflektierte oder zurückgestreute Lichtpulse 126 auf eines der Pixel der Empfangseinheit 114 auftreffen. Der Lidar-Sensor 110 umfasst außerdem eine Steuerungs- und Auswertungseinheit 116, welche die Sendeeinheit 112 und deren Laser mittels Steuersignalen 122 ansteuert und außerdem Betriebsmesssignale 128 von der Empfangseinheit 114 erfasst. Von den Betriebsmesssignalen 128 leitet die Auswertungseinheit 116 Ausgangssignale 160 des Lidar-Sensors 110 ab, wie dies nachstehend im Detail erläutert wird.

Die Sendeeinheit 112 des Lidar-Sensors 110 ist ferner dafür vorgesehen, den emittierten Laserstrahl bzw. das Sendesignal 124 derart abzulenken, dass das Sendesignal 124 einen gewissen Raumbereich überstreicht und diesen abtastet. Die Steuerungs- und Auswertungseinheit 116 gibt zu diesem Zweck ein entsprechendes Steuersignal aus, das in den Steuersignalen 122 enthalten ist und von der Sendeeinheit 112 empfangen wird. Die Ablenkung des Sendesignals 124 und die entsprechende Abtastung eines Raumbereichs sind in Fig. 1A durch den Pfeil 115 schematisch dargestellt.

Das Zeitintervall zwischen zwei Lichtpulsen, die der Laser der Sendeeinheit 112 emittiert, lässt sich in eine Vielzahl von kurzen Zeitabschnitten unterteilen, die beispielsweise jeweils 500 ps lang sind. Jedem dieser Zeitabschnitte lässt sich ferner ein Zeitpunkt zuordnen, der einem zeitlichen Abstand zum Startzeitpunkt der jeweiligen Messung entspricht, zu dem der letzte Lichtpuls von dem Laser der Sendeeinheit 112 emittiert wurde.

In Abhängigkeit von dem Abstand des Objekts 130 bezogen auf den Lidar-Sensor 110 erreicht der reflektierte oder zurückgestreute Lichtpuls 126 die Empfangseinheit 114 des Lidar-Sensors 110 zu unterschiedlichen Zeitpunkten, da die Lichtpulse 124, 126 in Abhängigkeit von dem Abstand des Objekts 130 ab dem Startzeitpunkt der Messung bis zum Nachweis in der Empfangseinheit 114 unterschiedliche Laufzeiten aufweisen. Die Pixel der Empfangseinheit 114 erzeugen bei dem jeweiligen Nachweis eines reflektierten oder zurückgestreuten Lichtpulses 126 ein elektrisches Signal als jeweiliges Betriebsmesssignal 128, das mittels eines Zeit-Digital-Wandlers (TDC, von Engl.: Time-to-Digital-Converter) in der Steuerungs- und Auswertungseinheit 116 einem der Zeitabschnitte innerhalb der Zeitintervalls zwischen zwei Lichtpulsen zugeordnet wird.

In der Betriebsphase des optischen Sensors bzw. Lidar-Sensors 110 emittiert die Sendeeinheit 112 mittels ihres Lasers eine Vielzahl von Lichtpulsen, so dass die entsprechenden elektrischen Signale bzw. Ereignisse, die durch reflektierte oder zurückgestreute Lichtpulse 126 in der Empfangseinheit 114 erzeugt und einem jeweiligen Zeitabschnitt zwischen zwei Lichtpulsen zugeordnet werden, für diese Vielzahl von emittierten Lichtpulsen 124 gezählt werden. Die Zuordnung der gezählten elektrischen Signale bzw. Ereignisse, die als Betriebsmesssignal 128 von der Empfangseinheit 114 ausgegeben und von der Steuerungs- und Auswertungseinheit 116 erfasst werden, erfolgt in der Steuerungs- und Auswertungseinheit 116 derart, dass der jeweilige Zählwert pro Zeitabschnitt in der Form eines Histogramms der zeitkorrelierten Einzelphotonenzählung (TCSPC-Histogramm) intern dargestellt wird.

Da die Zeitabschnitte des TCSPC-Histogramms unterschiedlichen Laufzeiten der Lichtpulse bis zu dem Objekt 130 und zurück zu dem Lidar-Sensor 110 und damit unterschiedlichen Distanzen bezogen auf den Lidar-Sensor 110 entsprechen, lassen sich den jeweiligen Zeitabschnitten, in die das Zeitintervall zwischen zwei Lichtpulsen des Lasers der Sendeeinheit 112 unterteilt ist, jeweilige Distanzen bezogen auf den Lidar-Sensor 110 zuordnen. Da sich die unterschiedlichen Laufzeiten der Lichtpulse 124, 126 somit in entsprechende Distanzen umrechnen lassen und die Zeitabschnitte jeweiligen Distanzen entsprechen, werden die Zählwerte des TCSPC-Histogramms üblicherweise für jeweilige sogenannte Distanzbins aufgetragen, die jeweils ein entsprechendes Distanzintervall abdecken, das einem jeweiligen Laufzeitintervall der Lichtpulse 124, 126 entspricht.

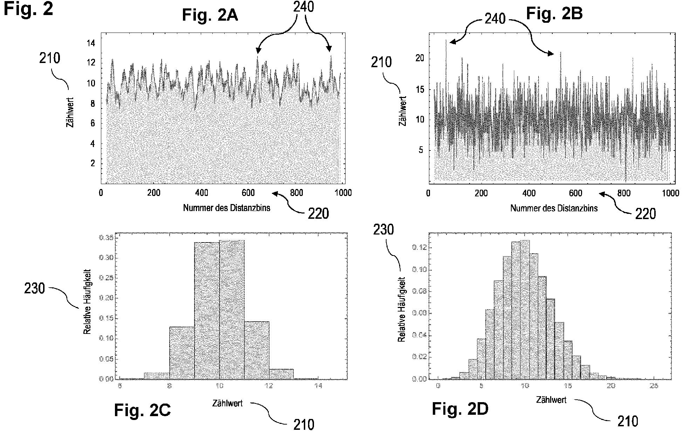

Zwei Beispiele für TCSPC-Histogramme sind in den beiden oberen Diagrammen von Fig. 2 schematisch dargestellt, die mit Fig. 2A und Fig. 2B bezeichnet sind. In den beiden TCSPC-Histogrammen von Fig. 2A und Fig. 2B sind jeweilige Zählwerte 210 an der y-Achse über einer Vielzahl von Distanzbins 220 an der x-Achse dargestellt. Beide Histogramme von Fig. 2A und 2B zeigen ein Hintergrundniveau bzw. einen Rauschmittelwert, das bzw. der für beide Histogramme etwa 10 beträgt. Das Hintergrundniveau existiert aufgrund der Umgebungsbedingungen des Lidar-Sensors 110, beispielsweise aufgrund von Fremdlicht, das von einer Fremdlichtquelle 140 (vgl. Fig. 1) emittiert und von den Pixeln der Empfangseinheit 114 detektiert wird. Das Hintergrundniveau ist folglich ein bestimmter Zählwert 210, der für alle Distanzbins gültig ist und dem eine bestimmte Intensität des Fremdlichts zugeordnet ist.

Die Histogramme von Fig. 2A und Fig 2B stellen zwei unterschiedliche Szenarien dar, bei denen unterschiedliche interne Eigenschaften oder Konfigurationen des optischen Sensors 110 zu einer stark unterschiedlichen Rauschcharakteristik führen. Bei gleichem Hintergrundniveau bzw. Rauschmittelwert weisen die beiden Histogramme von Fig. 2A und Fig. 2B daher ein stark unterschiedliches Rauschen auf, d.h. jeweils stark unterschiedliche Schwankungen bezogen auf das Hintergrundniveau bzw. den Rauschmittelwert. Wie nachstehend im Detail erläutert wird, ist es daher für die Histogramme von Fig. 2A und Fig. 2B unterschiedlich schwierig zu entscheiden, ob ein bestimmter Zählwert 210 durch eine Reflexion an einem Objekt erzeugt wird und somit ein richtig-positives Echo ist oder ob dieser Zählwert 210 durch Fremdlicht entstanden ist und daher ein falsch-positives Echo darstellt, das herausgefiltert oder in dem Ausgangssignal 160 (vgl. Fig. 1) markiert werden sollte.

Dies spiegelt sich auch in den beiden unteren Diagrammen von Fig. 2 wider, die mit Fig. 2C und 2D bezeichnet sind und in denen jeweilige relative Häufigkeiten 230 an der y-Achse über den jeweiligen Zählwerten 210 an der x-Achse aufgetragen sind. Fig. 2C repräsentiert somit die relativen Häufigkeiten der Zählwerte 210 für das Histogramm von Fig. 2A, während Fig. 2D die jeweiligen relativen Häufigkeiten für die Zählwerte 210 von Fig. 2B repräsentiert.

Die Verteilungen der Zählwerte 210 weisen in den Darstellungen von Fig. 2C bzw. 2D jeweils in etwa den gleichen Maximalwert bei etwa 10 auf, entsprechend dem Hintergrundniveau bzw. Rauschmittelwert von Fig. 2A und 2B. Entsprechend dem stark unterschiedlichen Rauschen in den Histogrammen von Fig. 2A und 2B weisen die beiden Verteilungen vonFig. 2C und 2D jedoch eine stark unterschiedliche Breite auf.

Wenn TCSPC-Histogramme zur Identifikation von Objekten 130 und zur Ermittlung von deren Distanz bezogen auf den Lidar-Sensor 110 ausgewertet werden, muss unterschieden werden können, ob ein bestimmter Zählwert eines Distanzbins tatsächlich von einem Lichtpuls 124, 126 stammt, der von dem Laser der Sendeeinheit 112 emittiert und als Lichtpuls 126 an einem Objekt 130 reflektiert bzw. zurückgestreut wurde, oder ob der entsprechende Zählwert des Distanzbins lediglich durch ein anderes Ereignis wie etwa durch Fremdlicht hervorgerufen wird. Die Qualität der Auswertung hängt stark vom Signal-Rauschverhältnis in den jeweiligen Histogrammen ab, wie dies in Fig. 2A und 2B veranschaulicht ist.

In beiden Histogrammen sind jeweils die beiden Distanzbins mit den größten Zählwerten mit 240 markiert, die mögliche Ausgangssignale 160 des Lidar-Sensors 110 (vgl. Fig. 1) darstellen. Aufgrund des Rauschens und des relativ hohen Hintergrundniveaus kann in beiden Histogrammen von Fig. 2A und 2B nicht ohne weiteres entschieden werden, ob die Zählwerte bei 240 tatsächlich als Echo eines Lichtpulses 124 an einem Objekt 130 entstanden sind oder nicht. Bei der Auswertung der Histogramme muss jedoch festgestellt werden können, ob beispielsweise die Zählwerte bei 240 echte Ausgangssignale 160 (vgl. Fig. 1) bzw. richtig-positive Ausgangssignale 160 oder ungültige Ausgangssignale 160 bzw. falsch-positive Ausgangssignale 160 sind. Das Ziel der Auswertung solcher Histogramme von Fig. 2A und Fig. 2B ist es, einen möglichst geringen Anteil von falsch-positiven Ausgangssignalen 160 zu erreichen, beispielsweise 1%, die nicht identifiziert und herausgefiltert werden. Dies bedeutet, dass im Mittel nur ein falsch-positives Ausgangssignal 160 in einhundert Ausgangssignalen 160 enthalten ist, die letztlich von der Steuerungs- und Auswertungseinheit 116 (vgl. Fig. 1) ausgegeben werden.

Bei bekannten Auswertungsverfahren wird meist ein geeignet angenommenes Abstandsmaß eines Zählwerts 210 bezogen auf den jeweiligen Mittelwert des Histogramms verwendet, um zu entscheiden, ob der jeweilige Zählwert 210 falsch-positiv oder richtig-positiv ist. Als ein solches Abstandsmaß wird üblicherweise ein Vielfaches der Standardabweichung bezogen auf den jeweiligen Mittelwert bzw. das Hintergrundniveau oder eine Mahalanobis-Distanz bezogen auf das Hintergrundniveau verwendet. Die Verwendung der Standardabweichung oder der Mahalanobis-Distanz bezogen auf den Mittelwert setzt jedoch die Annahme voraus, dass die Verteilung der Zählwerte einem bestimmten Modell bzw. einer bestimmten Verteilung genügt, beispielsweise einer Poisson-Verteilung, einer Binomialverteilung oder einer Normalverteilung.

Wie in den Diagrammen von Fig. 2C und 2D jedoch erkennbar ist, sind die Verteilungen der relativen Häufigkeiten 230 für die Zählwerte zwar einer Normalverteilung ähnlich, aber nicht exakt symmetrisch. Folglich kann eine analytische Beschreibung dieser Verteilungen beispielsweise mittels einer Normalverteilung fehlerbehaftet sein. Die Verwendung eines Vielfachen der Standardabweichung, die letztlich eine Normalverteilung voraussetzt, kann außerdem bei unterschiedlichen Hintergrundniveaus zu einer unterschiedlich guten Filterung der Zählwerte in den Histogrammen führen, da die Approximation an eine Normalverteilung in Abhängigkeit vom jeweiligen Hintergrundniveau unterschiedlich gut sein kann. Dies führt dazu, dass eine sogenannte Falsch-Positiv-Rate (FPR), d.h. der Anteil der nicht erkannten falsch-positiven Ausgangssignale 160, für unterschiedliche Hintergrundniveaus stark unterschiedlich sein kann.

Diese Problematik lässt sich durch die Diagramme von Fig. 2 veranschaulichen. Wenn beispielsweise ein Zählwert von 15 als einer der Maximalwerte in den Histogrammen von Fig. 2A und Fig. 2B ermittelt werden würde, müsste die Steuerungs- und Auswertungseinheit 116 automatisch entscheiden können, ob dieser Zählwert von einem realen Objekt 130 stammt oder nicht. In dem Beispiel von Fig. 2A und 2C liegt ein solcher Wert von 15 bereits in einem Ausläufer bzw. sozusagen außerhalb der Verteilung der relativen Häufigkeiten 230, während dieser Wert für das Histogramm von Fig. 2B und die Verteilung von Fig. 2Dnoch bei einer relativen Häufigkeit innerhalb der statistischen Verteilung liegt, d.h. noch nicht weit genug in einem Ausläufer der Verteilung. In dem Beispiel von Fig. 2A und 2C ist es folglich relativ wahrscheinlich, dass ein Zählwert von 15 von einem realen Objekt 130 stammt und somit ein richtig-positives Ausgangssignal 160 ist, während ein solcher Wert für das Beispiel von Fig. 2B und 2D mit relativ hoher Wahrscheinlichkeit als falsch-positives Ausgangssignal 160 anzusehen ist.

Das in Fig. 1B gezeigte Sensorsystem 100 und ein entsprechendes Kalibrierungsverfahren sind daher für eine Kalibrierungsphase des optischen Sensors bzw. Lidar-Sensors 110 vorgesehen. In der Kalibrierungsphase wird ein Kalibrierungsdatensatz 170 für die Steuerungs- und Auswertungseinheit 116 des optischen Sensors 110 generiert. Mittels des Kalibrierungsdatensatzes 170 ist die Steuerungs- und Auswertungseinheit 116 in der Lage, die Signale des Lidar-Sensors 110 bzw. die TCSPC-Histogramme auf eine solche Weise bezüglich falsch-positiver Ausgangssignale 160 zu filtern, dass eine Annahme beispielsweise bezüglich einer bestimmten Verteilung bezogen auf einen Mittelwert, wie beispielsweise eine Normalverteilung, nicht erforderlich ist. Außerdem sollte eine nahezu konstante Falsch-Positiv-Rate unabhängig vom jeweiligen Hintergrundniveau bzw. den Umgebungsbedingungen des Lidar-Sensors 110 vorgegeben werden können.

Das Sensorsystem 100 umfasst daher zusätzlich zu dem Lidar-Sensor 110 eine Kalibrierungseinrichtung 150 (vgl. Fig. 1B), die während der Kalibrierungsphase mit dem Lidar-Sensor 110 in Verbindung steht. Wie in Fig. 1B schematisch dargestellt ist, ist die Sendeeinheit 112 des optischen Sensors bzw. Lidar-Sensors 110 während der Kalibrierungsphase deaktiviert. Stattdessen wird die Empfangseinheit 114 von einer Beleuchtungseinheit 152 der Kalibrierungseinrichtung 150 beleuchtet, die während der Kalibrierungsphase mehrere vorbestimmte Lichtintensitäten bereitstellt.

Die Beleuchtungseinheit 152 kann entweder eine externe Lichtquelle sein, welche die verschiedenen vorbestimmten Lichtintensitäten selbst erzeugt. Die Beleuchtungseinheit 152 kann jedoch auch lediglich eine konstante Lichtintensität einer externen Lichtquelle, wie etwa der Fremdlichtquelle 140 (vgl. Fig. 1A), modulieren oder abschatten, um dadurch die verschiedenen vorbestimmten Lichtintensitäten für die Empfangseinheit 114 zu generieren. Beispielsweise kann die Beleuchtungseinheit 152 lediglich das Sonnenlicht abschatten, so dass sie selbst keine eigene Lichtquelle aufweist.

Trotz deaktiviertem Laser der Sendeeinheit 112 gibt die Empfangseinheit 114 in der Kalibrierungsphase Kalibrierungsmesssignale 154 aus, die durch die jeweiligen Lichtintensitäten bedingt sind, die durch die Beleuchtungseinheit 152 bereitgestellt werden. Die Steuerungs- und Auswertungseinheit 116 des Lidar-Sensors 110 erfasst die Kalibrierungsmesssignale 154 für die jeweiligen vorbestimmten Lichtintensitäten der Beleuchtungseinheit 152 und erstellt ebenso wie in der in Fig. 1A dargestellten Betriebsphase des Lidar-Sensors 110 entsprechende TCSPC-Histogramme.

Eine Verarbeitungseinheit 156 der Kalibrierungseinrichtung 150 ist mit der Steuerungs- und Auswertungseinheit 116 des Lidar-Sensors 110 kommunikativ verbunden. In der Kalibrierungsphase des Lidar-Sensors 110 empfängt die Verarbeitungseinheit 156 die TCSPC-Histogramme, welche die Steuerungs- und Auswertungseinheit 116 anhand der Kalibrierungssignale 154 erstellt, und wertet diese aus, wie nachstehend beschrieben ist, um dadurch den Kalibrierungsdatensatz 170 zu generieren, den der Lidar-Sensor 110 in der Betriebsphase verwendet. Die Verarbeitungseinheit 156 überträgt den Kalibrierungsdatensatz 170 am Ende der Kalibrierungsphase an die Steuerungs- und Auswertungseinheit 116, die den Kalibrierungsdatensatz 170 speichert, damit dieser während der Betriebsphase des Lidar-Sensors 110 zur Verfügung steht.

Die Verarbeitungseinheit 156 ist zwar in Fig. 1B als Teil der Kalibrierungseinrichtung 150 außerhalb des Lidar-Sensors 110 dargestellt. Dennoch kann die Verarbeitungseinheit 156 auch in die Steuerungs- und Auswertungseinheit 116 integriert werden und somit eine Komponente des Lidar-Sensors 110 sein. In diesem Fall wird die Verarbeitungseinheit 156 innerhalb der Steuerungs- und Auswertungseinheit 116 nur dann aktiviert, wenn sich der Lidar-Sensor 110 in der Kalibrierungsphase befindet.

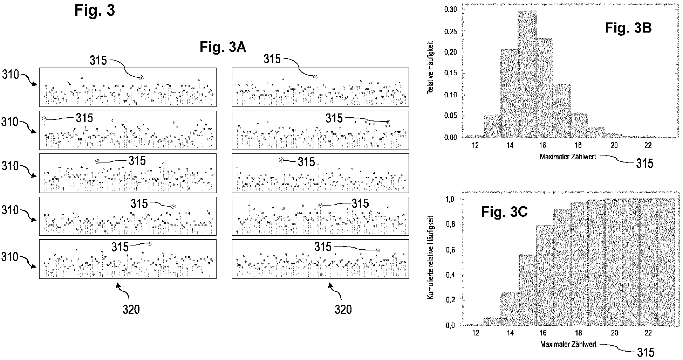

Die Verarbeitungseinheit 156 umfasst ein Steuermodul 158, das mit der Beleuchtungseinheit 152 in Verbindung steht, um die jeweilige Lichtintensität zu steuern, mit der die Beleuchtungseinheit 152 die Empfangseinheit 114 des Lidar-Sensors 110 beleuchtet. Das Steuermodul 158 gibt somit eine jeweilige Lichtintensität der Beleuchtungseinheit 152 und damit ein entsprechendes Hintergrundniveau vor. Für diese erzeugt die Empfangseinheit 114 die jeweiligen Kalibrierungsmesssignale 154, anhand derer die Steuerungs- und Auswertungseinheit 116 wiederum entsprechende TCSPC-Histogramme generiert (vgl. Fig. 3). Diese verwendet die Verarbeitungseinheit 156 anschließend, um den jeweiligen Signalschwellenwert, der dem Hintergrundniveau zugeordnet ist, als Element des Kalibrierungsdatensatzes 170 zu ermitteln.

Die vorbestimmten, variablen Lichtintensitäten der Beleuchtungseinrichtung 152 entsprechen somit jeweils Hintergrundniveaus der jeweiligen Histogramme, die während der Betriebsphase des Lidar-Sensors 110 zu erwarten sind. Für jede vorbestimmte Lichtintensität, die somit einem bestimmten zu erwartenden Hintergrundniveau entspricht, erstellt die Steuerungs- und Auswertungseinheit 116 eine Vielzahl von Histogrammen, damit eine ausreichende Statistik während der Kalibrierungsphase zur Verfügung steht.

In Fig. 3 sind beispielhaft zehn solcher Histogramme (vgl. Fig. 3A) für ein bestimmtes Hintergrundniveau zusammen mit der entsprechenden statistischen Auswertung (vgl. Fig. 3B und 3C) dargestellt. In den Histogrammen sind wie in den Diagrammen von Fig. 2A und 2C Zählwerte 310 über jeweiligen Distanzbins 320 aufgetragen sind, allerdings für die Kalibrierungsphase bei deaktivierter Sendeeinheit 112 des Lidar-Sensors 110. Die Histogramme von Fig. 3A repräsentieren bei deaktivierter Sendeeinheit 112 nur eines der Hintergrundniveaus mit dem dazugehörigen Rauschen der Kalibrierungssignale 154.

Für jedes der Histogramme von Fig. 3A, die während der Kalibrierungsphase des Lidar-Sensors 110 für ein vorgegebenes Hintergrundniveau erstellt werden, wird mittels der Verarbeitungseinheit 156 jeweils ein maximaler Zählwert 315 ermittelt, der in den jeweiligen Histogrammen markiert ist. Die Maxima 315 werden verwendet, um eine Verteilung ihrer relativen Häufigkeiten zu ermitteln, wie dies in Fig. 3B dargestellt ist. In Fig. 3B ist somit die jeweilige relative Häufigkeit (an der y-Achse) für die maximalen Zählwerte aus den Histogrammen von Fig. 3A (an der x-Achse) aufgetragen. Anhand der relativen Häufigkeiten von Fig. 3B wird anschließend eine Verteilung der kumulierten relativen Häufigkeiten ermittelt, die in Fig. 3C in Abhängigkeit von dem maximalen Zählwert 315 dargestellt ist. Wie zu erwarten ist, nähert sich die kumulierte relative Häufigkeit mit steigenden Zählwerten dem Wert von 1,0 an.

Da das zugrundeliegende Kalibrierungsmesssignal 154 der Histogramme von Fig. 3A lediglich durch die Beleuchtungseinheit 152 erzeugt wurde, um ein bestimmtes Hintergrundniveau mit Rauschen zu simulieren, entspricht ein bestimmter Wert der kumulierten relative Häufigkeit in Fig. 3C, der einem bestimmten Zählwert zugeordnet ist, einer Wahrscheinlichkeit, mit der alle kleineren Zählwerte als dieser bestimmte Zählwert in der Betriebsphase des Lidar-Sensors 110 falsch-positive Zählwerte sind, die nur durch das Hintergrundniveau und das Rauschen hervorgerufen werden. Umgekehrt lässt sich einer bestimmten Wahrscheinlichkeit bzw. kumulierten relativen Häufigkeit anhand der Darstellung der kumulierten relativen Häufigkeiten von Fig. 3C direkt ein bestimmter maximaler Zählwert zuordnen, ab dem alle kleineren Zählwerte mit dieser Wahrscheinlichkeit in der Betriebsphase als falsch-positive Zählwerte erkannt werden.

Beispielsweise beträgt bei einem bestimmten Zählwert von 20, dem in Fig. 3 C eine kumulierte relative Häufigkeit von 0,99 zugeordnet ist, die Wahrscheinlichkeit nur noch 1%, dass ein falsch-positives Ausgangssignal 160 nicht erkannt wird, da die restliche kumulierte relative Häufigkeit aller größeren Zählwerte nur noch 0,01 beträgt. Mit anderen Worten ist ein Zählwert von 20 in der Betriebsphase des Lidar-Sensors 110 für das entsprechende Hintergrundniveau mit einer Wahrscheinlichkeit von 1% ein falsch-positives Ausgangssignal 160 bzw. ungültiges Ausgangssignal 160, während der Zählwert von 20 mit einer Wahrscheinlichkeit von 99% ein richtig-positives bzw. gültiges Ausgangssignal 160 ist.

In der Kalibrierungsphase des Lidar-Sensors 110 wird daher zunächst ein bestimmter Wert für die Falsch-Positiv-Rate bzw. Wahrscheinlichkeit für das Auftreten eines falsch-positiven Ausgangssignals 160 vorgegeben, beispielsweise 1%. Anhand der kumulierten relativen Häufigkeit von Fig. 3C wird anschließend ein Zählwert bei einer kumulierten relativen Häufigkeit ermittelt, die der vorgegebenen Wahrscheinlichkeit komplementär ist, d.h. für das vorliegende Beispiel bei der kumulierten relativen Häufigkeit von 0,99. Dieser Zählwert wird in der Betriebsphase als Signalschwellenwert für das betrachtete Hintergrundniveau verwendet, das durch eine vorbestimmte Lichtintensität der Beleuchtungseinheit 152 simuliert wird. Der jeweilige Signalschwellenwert bildet zusammen mit dem zugeordneten Hintergrundniveau ein Element des Kalibrierungsdatensatzes 170 (vgl. Fig. 1), der von der Verarbeitungseinheit 156 erzeugt wird, um von dieser an die Steuerungs- und Auswertungseinheit 116 des Lidar-Sensors 110 übertragen und dort gespeichert zu werden. Durch den jeweiligen Signalschwellenwert wird sichergestellt, dass für das vorliegende Beispiel in der Betriebsphase bei dem betrachteten Hintergrundniveau 99% der falsch-positiven Zählwerte in dem Ausgangssignal 160 erkannt bzw. herausgefiltert werden und nur 1% nicht erkannte falsch-positiven Zählwerte zu erwarten sind.

Während der Kalibrierungsphase des Lidar-Sensors 110 werden zunächst sämtliche Hintergrundniveaus ermittelt, die für die Betriebsphase des Lidar-Sensors 110 relevant sind, und entsprechenden vorbestimmten Lichtintensitäten zugeordnet, die von der Beleuchtungseinheit 152 bereitzustellen sind. Die Histogramme von Fig. 3A sowie die Verteilungen der relativen und kumulierten Häufigkeiten von Fig. 3B und Fig. 3C werden anschließend für jedes relevante Hintergrundniveau bzw. jede vorbestimmte Lichtintensität ermittelt, damit die Verarbeitungseinheit den Kalibrierungsdatensatz 170 erzeugen kann.

Anhand der jeweiligen kumulativen relativen Häufigkeiten (vgl. Fig. 3C) wird anschließend für jedes relevante Hintergrundniveau ein bestimmter Zählwert als Signalschwellenwert ermittelt, welcher der vorgegebenen Wahrscheinlichkeit bzw. Falsch-Positiv-Rate von beispielsweise 1% entspricht. Somit wird jedem relevanten Hintergrundniveau für den Lidar-Sensor 110 ein bestimmter Signalschwellenwert in der Form eines bestimmten Zählwerts zugeordnet. Die jeweiligen Wertepaare von Hintergrundniveau und Signalschwellenwert werden schließlich in einer Nachschlagetabelle abgelegt, die für die Betriebsphase des Lidar-Sensors 110 bereitgestellt wird und somit den Kalibrierungsdatensatz 170 repräsentiert. Während der Betriebsphase des Lidar-Sensors 110 muss der Zählwert in einem TCSPC-Histogramm folglich für ein bestimmtes Hintergrundniveau mindestens den Signalschwellenwert erreichen, um als ein gültiges Ausgangssignal 160 (vgl. Fig. 1A) des Lidar-Sensors 110 identifiziert zu werden.

Während der Betriebsphase des optischen Sensors bzw. Lidar-Sensors 110 werden nach der Kalibrierungsphase Betriebsmesssignale 128 (vgl. Fig. 1A) mittels der Empfangseinheit 114 bei aktivierter Sendeeinheit 112 und deaktivierter bzw. in der Betriebsphase nicht vorhandener Beleuchtungseinheit 152 erfasst, und für die Betriebsmesssignale 128 wird ein ähnliches TCSPC-Histogramm wie diejenigen Histogramme erzeugt, die in Fig. 2A und 2C dargestellt sind. Anhand dieses TCSPC-Histogramms wird anschließend ein momentanes Hintergrundniveau ermittelt, beispielsweise als Mittelwert oder Median über das Histogramm, um diesem momentanen Hintergrundniveau einen der Signalschwellenwerte aus der Kalibrierungsphase des Lidar-Sensors 110 zuzuordnen. Die jeweilige Zählwerte aus dem TCSPC-Histogramm werden anschließend als ungültiges bzw. falsch-positives Signal identifiziert, wenn der Zählwert kleiner als der Signalschwellenwert ist, der dem momentanen Hintergrundniveau zugeordnet ist bzw. für dieses ausgewählt wurde. Als gültiges Ausgangssignal 160 des Lidar-Sensors 110 werden umgekehrt nur diejenigen Zählwerte des TCSPC-Histogramms zusammen mit dem entsprechenden Wert des Distanzbins ausgegeben, für die der Zählwert größer als der Signalschwellenwert für das momentane Hintergrundniveau oder gleich diesem ist.

### Bezugszeichenliste

- 100: Sensorsystem
- 110: optischer Sensor, Lidar-Sensor
- 112: Sendeeinheit
- 114: Empfangseinheit
- 115: Abtastbereich
- 116: Steuerungs- und Auswertungseinheit
- 122: Steuersignal
- 124: Sendesignal
- 126: Empfangssignal
- 128: Betriebsmesssignal
- 130: Objekt
- 140: Fremdlichtquelle
- 150: Kalibrierungseinrichtung
- 152: Beleuchtungseinheit
- 154: Kalibrierungsmesssignal
- 156: Verarbeitungseinheit
- 158: Steuermodul
- 160: Ausgangssignal
- 170: Kalibrierungsdatensatz
- 210: Zählwert
- 220: Distanzbin
- 230: relative Häufigkeit
- 240: maximale Zählwerte, identifizierte Echos
- 310: Zählwert
- 315: maximaler Zählwert pro Histogramm
- 320: Distanzbin

## Patentansprüche

1. Optischer Sensor (110), umfassend:
eine Sendeeinheit (112) zum Emittieren eines optischen Sendesignals (124) in die Umgebung des optischen Sensors (110),
eine Empfangseinheit (114), die ausgebildet ist, einen reflektierten oder remittierten Teil des Sendesignals (124) zu erfassen, und
eine Steuerungs- und Auswertungseinheit (116), die ausgebildet ist:
vor einer Betriebsphase des optischen Sensors (110) einen Kalibrierungsdatensatz (170) zu empfangen und zu speichern,
wobei der Kalibrierungsdatensatz (170) eine Vielzahl von Signalschwellenwerten umfasst, die einem jeweiligen Hintergrundniveau zugeordnet sind, das einer jeweiligen vorbestimmten Lichtintensität entspricht,
während der Betriebsphase des optischen Sensors (110):
Betriebsmesssignale (128) bei aktivierter Sendeeinheit (112) von der Empfangseinheit (114) zu empfangen,
ein momentanes Hintergrundniveau zu ermitteln und anhand des momentanen Hintergrundniveaus einen der Signalschwellenwerte des Kalibrierungsdatensatzes (170) auszuwählen, und
Ausgangssignale (160), die von den Betriebsmesssignalen (128) abgeleitet sind, als ungültiges Signal zu identifizieren, wenn das jeweilige Ausgangssignal (160) kleiner als der ausgewählte Signalschwellenwert ist,
wobei
der optische Sensor (110) ausgebildet ist, während einer Kalibrierungsphase vor der Betriebsphase mit einer Kalibrierungseinrichtung (150) in Verbindung zu stehen, die eine Beleuchtungseinheit (152) aufweist, welche die Empfangseinheit (114) mit der jeweiligen vorbestimmten Lichtintensität beleuchtet, der das jeweilige Hintergrundniveau entspricht,
die Steuerungs- und Auswertungseinheit (116) ferner ausgebildet ist, während der Kalibrierungsphase für jede vorbestimmte Lichtintensität Kalibrierungsmesssignale (154) der Empfangseinheit (114) zu erfassen, so dass eine Verarbeitungseinheit (156) in der Lage ist, den Kalibrierungsdatensatz (170) anhand der Kalibrierungsmesssignale (154) zu generieren,
der optische Sensor (110) für eine zeitkorrelierte Einzelphotonenzählung, TCSPC, ausgebildet ist,
die Steuerungs- und Auswertungseinheit (116) ausgebildet ist, sowohl für die Kalibrierungsmesssignale (154) als auch für die Betriebsmesssignale (128) jeweilige Histogramme der zeitkorrelierten Einzelphotonenzählung, TCSPC-Histogramme, zu erzeugen,
die Steuerungs- und Auswertungseinheit (116) ferner ausgebildet ist, während der Kalibrierungsphase des optischen Sensors (110) jeweils eine Vielzahl von TCSPC-Histogrammen für jede vorbestimmte Lichtintensität zu erzeugen, und
die Verarbeitungseinheit (156) ausgebildet ist, während der Kalibrierungsphase des optischen Sensors (110) für jedes der TCSPC-Histogramme, die der jeweiligen vorbestimmten Lichtintensität zugeordnet sind, einen jeweiligen maximalen Zählwert (315) zu ermitteln, um eine statistische Verteilung der maximalen Zählwerte (315) für die jeweilige vorbestimmte Lichtintensität zu erstellen, und die Signalschwellenwerte für die jeweiligen vorbestimmten Lichtintensitäten anhand der statistischen Verteilung zu ermitteln.

2. Optischer Sensor (110) nach Anspruch 1, wobei die Verarbeitungseinheit (156) ferner ausgebildet ist, während der Kalibrierungsphase des optischen Sensors (110):
anhand der statistischen Verteilung jeweils eine kumulierte relative Häufigkeit der maximalen Zählwerte (315) für jede vorbestimmte Lichtintensität zu ermitteln und
die jeweiligen Signalschwellenwerte für die vorbestimmten Lichtintensitäten anhand der jeweiligen kumulierten relativen Häufigkeit zu ermitteln.

3. Optischer Sensor (110) nach Anspruch 2, wobei die Verarbeitungseinheit (156) ferner ausgebildet ist, während der Kalibrierungsphase des optischen Sensors (110) mindestens einen vorgegebenen Prozentanteil für falsch-positive Ausgangssignale (160) zu verwenden, um die jeweiligen Signalschwellenwerte für das zugeordnete Hintergrundniveau anhand der jeweiligen kumulierten relativen Häufigkeit zu ermitteln.

4. Optischer Sensor (110) nach Anspruch 2 oder 3, wobei die Verarbeitungseinheit (156) ferner ausgebildet ist, während der Kalibrierungsphase des optischen Sensors (110) mehrere vorgegebenen Prozentanteile für falsch-positive Ausgangssignale (160) zu verwenden, um für jeden vorgegebenen Prozentanteil einen Satz jeweiliger Signalschwellenwerte für das zugeordnete Hintergrundniveau anhand der jeweiligen kumulierten relativen Häufigkeit zu ermitteln.

5. Optischer Sensor (110) nach einem der Ansprüche 1 bis 4, wobei die Verarbeitungseinheit (156) ferner ausgebildet ist, während der Kalibrierungsphase des optischen Sensors (110) den Kalibrierungsdatensatz (170) in der Form mindestens einer Nachschlagetabelle zu erstellen, in der die jeweiligen Signalschwellenwerte und die zugeordneten Hintergrundniveaus enthalten sind.

6. Optischer Sensor (110) nach einem der Ansprüche 1 bis 5, wobei der optische Sensor (110) als Lidar-Sensor mit zeitkorrelierter Einzelphotonenzählung, TCSPC, ausgebildet ist.

7. Optischer Sensor (110) nach Anspruch 6, wobei die Verarbeitungseinheit (156) ferner ausgebildet ist, in der Kalibrierungsphase des Lidar-Sensors (110) für mehrere Abstandsbereiche innerhalb einer Reichweite des Lidar-Sensors (110) einen jeweiligen Satz von Signalschwellenwerten zu ermitteln.

8. Optischer Sensor (110) nach einem der Ansprüche 1 bis 7, wobei
die Empfangseinheit (114) des optischen Sensors (110) mehrere Gruppen von Pixeln umfasst,
die Gruppen von Pixeln jeweils unterschiedliche Charakteristiken bezüglich des Rauschens aufweisen, und
die Verarbeitungseinheit (156) ferner ausgebildet ist, in der Kalibrierungsphase des optischen Sensors (110) für jede Gruppe von Pixeln einen jeweiligen Satz von Signalschwellenwerten zu ermitteln.

9. Sensorsystem (100), umfassend:
einen optischen Sensor (110) nach einem der vorstehenden Ansprüche, und
eine Kalibrierungseinrichtung (150), die während einer Kalibrierungsphase des optischen Sensors (110) mit dem optischen Sensor in Verbindung steht und ausgebildet ist, den Kalibrierungsdatensatz (170) für den optischen Sensor (110) zu generieren.

10. Verfahren zum Kalibrieren eines optischen Sensors (110), der eine Sendeeinheit (112) und eine Empfangseinheit (114) aufweist und während einer Kalibrierungsphase mit einer Kalibrierungseinrichtung (150) in Verbindung steht, wobei das Verfahren umfasst, dass:
eine Lichtintensität einer Beleuchtungseinheit (152) der Kalibrierungseinrichtung (150) des optischen Sensors (110) derart variiert wird, dass die Empfangseinheit (114) mit mehreren vorbestimmten Lichtintensitäten beleuchtet wird,
für jede vorbestimmte Lichtintensität Kalibrierungsmesssignale (154) der Empfangseinheit (114) erfasst werden, anhand der Kalibrierungsmesssignale (154) ein jeweiliger Signalschwellenwert ermittelt wird und der jeweilige Signalschwellenwert einem Hintergrundniveau für den optischen Sensor (110) zugeordnet wird, welches der jeweiligen vorbestimmten Lichtintensität entspricht, und
die Signalschwellenwerte für eine Betriebsphase des optischen Sensors (110) mit aktivierter Sendeeinheit (112) als Kalibrierungsdatensatz (170) bereitgestellt werden, so dass eine Steuerungs- und Auswertungseinheit (116) des optischen Sensors (110) während der Betriebsphase in der Lage ist:
einen der Signalschwellenwerte des Kalibrierungsdatensatzes (170) anhand eines momentanen Hintergrundniveaus auszuwählen, das anhand von Betriebsmesssignalen (128) ermittelt wird, die mittels der Empfangseinheit (114) des optischen Sensors (110) während der Betriebsphase erfasst werden, und
Ausgangssignale (160), die von den Betriebsmesssignalen (128) bei aktivierter Sendeinheit (112) abgeleitet sind, als ungültiges Signal zu identifizieren, wenn das jeweilige Ausgangssignal (160) kleiner als der ausgewählte Signalschwellenwert ist,
wobei
der optische Sensor (110) für eine zeitkorrelierte Einzelphotonenzählung, TCSPC, ausgebildet ist,
sowohl für die Kalibrierungsmesssignale (154) als auch für Betriebsmesssignale (128) jeweilige Histogramme der zeitkorrelierten Einzelphotonenzählung, TCSPC-Histogramme, erzeugt werden,
jeweils eine Vielzahl von TCSPC-Histogrammen für die Kalibrierungsmesssignale (154) bei jeder vorbestimmten Lichtintensität erzeugt werden,
für jedes der TCSPC-Histogramme, die der jeweiligen vorbestimmten Lichtintensität zugeordnet werden, ein jeweiliger maximaler Zählwert (315) ermittelt wird, um eine statistische Verteilung der maximalen Zählwerte (315) für die jeweilige vorbestimmte Lichtintensität zu erstellen, und
die Signalschwellenwerte für die jeweiligen vorbestimmten Lichtintensitäten anhand der statistischen Verteilung ermittelt werden.

11. Verfahren nach Anspruch 10, wobei
anhand der statistischen Verteilung jeweils eine kumulierte relative Häufigkeit der maximalen Zählwerte (315) für jede vorbestimmte Lichtintensität ermittelt wird und
die jeweiligen Signalschwellenwerte für die vorbestimmten Lichtintensitäten anhand der jeweiligen kumulierten relativen Häufigkeit ermittelt werden.

## Claims

1. An optical sensor (110), comprising:
a transmission unit (112) for emitting an optical transmission signal (124) into the environment of the optical sensor (110),
a reception unit (114) which is configured to detect a reflected or remitted portion of the transmission signal (124), and
a control and evaluation unit (116) which is configured:
to receive and store a calibration data set (170) before an operating phase of the optical sensor (110),
wherein the calibration data set (170) comprises a plurality of signal threshold values that are associated with a respective background level which corresponds to a respective predetermined light intensity,
during the operating phase of the optical sensor (110):
to receive operating measurement signals (128) from the reception unit (114) when the transmission unit (112) is activated,
to determine a current background level and to select one of the signal threshold values of the calibration data set (170) based on the current background level, and
to identify output signals (160) that are derived from the operating measurement signals (128) as an invalid signal if the respective output signal (160) is smaller than the selected signal threshold value, wherein
the optical sensor (110) is configured to be in communication with a calibration device (150) during a calibration phase before the operating phase, said calibration device (150) having an illumination unit (152) that illuminates the reception unit (114) with the respective predetermined light intensity to which the respective background level corresponds,
the control and evaluation unit (116) is further configured, during the calibration phase, to detect calibration measurement signals (154) of the reception unit (114) for each predetermined light intensity so that a processing unit (156) is able to generate the calibration data set (170) based on the calibration measurement signals (154),
the optical sensor (110) is configured for a time-correlated single photon counting, TCSPC,
the control and evaluation unit (116) is configured to produce respective histograms of the time-correlated single photon counting, TCSPC histograms, for both the calibration measurement signals (154) and the operating measurement signals (128),
the control and evaluation unit (116) is further configured, during the calibration phase of the optical sensor (110), to produce a respective plurality of TCSPC histograms for each predetermined light intensity, and
the processing unit (156) is configured, during the calibration phase of the optical sensor (110), to determine a respective maximum count value (315) for each of the TCSPC histograms that are associated with the respective predetermined light intensity in order to produce a statistical distribution of the maximum count values (315) for the respective predetermined light intensity, and to determine the signal threshold values for the respective predetermined light intensities based on the statistical distribution.

2. An optical sensor (110) according to claim 1, wherein
the processing unit (156) is further configured, during the calibration phase of the optical sensor (110):
to determine a respective cumulative relative frequency of the maximum count values (315) for each predetermined light intensity based on the statistical distribution, and
to determine the respective signal threshold values for the predetermined light intensities based on the respective cumulative relative frequency.

3. An optical sensor (110) according to claim 2, wherein
the processing unit (156) is further configured, during the calibration phase of the optical sensor (110), to use at least one predefined percentage for false-positive output signals (160) in order to determine the respective signal threshold values for the associated background level based on the respective cumulative relative frequency.

4. An optical sensor (110) according to claim 2 or 3, wherein
the processing unit (156) is further configured, during the calibration phase of the optical sensor (110), to use a plurality of predefined percentages for false-positive output signals (160) in order to determine, for each predefined percentage, a set of respective signal threshold values for the associated background level based on the respective cumulative relative frequency.

5. An optical sensor (110) according to any one of the claims 1 to 4, wherein the processing unit (156) is further configured, during the calibration phase of the optical sensor (110), to produce the calibration data set (170) in the form of at least one look-up table in which the respective signal threshold values and the associated background levels are contained.

6. An optical sensor (110) according to any one of the claims 1 to 5, wherein the optical sensor (110) is configured as a lidar sensor with time-correlated single photon counting, TCSPC.

7. An optical sensor (110) according to claim 6, wherein
the processing unit (156) is further configured, in the calibration phase of the lidar sensor (110), to determine a respective set of signal threshold values for a plurality of distance ranges within a range of the lidar sensor (110).

8. An optical sensor (110) according to any one of the claims 1 to 7, wherein
the reception unit (114) of the optical sensor (110) comprises a plurality of groups of pixels,
the groups of pixels each have different characteristics with respect to the noise, and
the processing unit (156) is further configured to determine a respective set of signal threshold values for each group of pixels in the calibration phase of the optical sensor (110).

9. A sensor system (100) comprising:
an optical sensor (110) according to any one of the preceding claims; and
a calibration device (150) which is in communication with the optical sensor (110) during a calibration phase of the optical sensor (110) and which is configured to generate the calibration data set (170) for the optical sensor (110).

10. A method of calibrating an optical sensor (110) which has a transmission unit (112) and a reception unit (114) and which is in communication with a calibration device (150) during a calibration phase, wherein the method comprises that:
a light intensity of an illumination unit (152) of the calibration device (150) of the optical sensor (110) is varied such that the reception unit (114) is illuminated with a plurality of predetermined light intensities,
calibration measurement signals (154) of the reception unit (114) are acquired for each predetermined light intensity, a respective signal threshold value is determined based on the calibration measurement signals (154), and the respective signal threshold value is associated with a background level for the optical sensor (110), which background level corresponds to the respective predetermined light intensity, and
the signal threshold values for an operating phase of the optical sensor (110) when the transmission unit (112) is activated are provided as a calibration data set (170) so that, during the operating phase, a control and evaluation unit (116) of the optical sensor (110) is able:
to select one of the signal threshold values of the calibration data set (170) based on a current background level which is determined based on operating measurement signals (128) that are acquired by means of the reception unit (114) of the optical sensor (110) during the operating phase, and
to identify output signals (160) that are derived from the operating measurement signals (128) when the transmission unit (112) is activated as an invalid signal if the respective output signal (160) is smaller than the selected signal threshold value,
wherein
the optical sensor (110) is configured for a time-correlated single photon counting, TCSPC,
respective histograms of the time-correlated single photon counting, TCSPC histograms, are produced for both the calibration measurement signals (154) and the operating measurement signals (128),
a respective plurality of TCSPC histograms are produced for the calibration measurement signals (154) at each predetermined light intensity,
a respective maximum count value (315) is determined for each of the TCSPC histograms that are associated with the respective predetermined light intensity in order to produce a statistical distribution of the maximum count values (315) for the respective predetermined light intensity, and
the signal threshold values for the respective predetermined light intensities are determined based on the statistical distribution.

11. A method according to claim 10, wherein
a respective cumulative relative frequency of the maximum count values (315) is determined for each predetermined light intensity based on the statistical distribution, and
the respective signal threshold values for the predetermined light intensities are determined based on the respective cumulative relative frequency.

## Revendications

1. Capteur optique (110) comprenant :
une unité d'émission (112) pour émettre un signal optique d'émission (124) dans l'environnement du capteur optique (110),
une unité de réception (114) conçue pour détecter une partie réfléchie ou
renvoyée du signal d'émission (124), et
une unité de commande et d'évaluation (116) conçue pour :
avant une phase de fonctionnement du capteur optique (110), recevoir et stocker un ensemble de données d'étalonnage (170),
l'ensemble de données d'étalonnage (170) comprenant une pluralité de valeurs seuils de signal qui sont associées à un niveau de fond respectif correspondant à une intensité lumineuse prédéterminée respective,
pendant la phase de fonctionnement du capteur optique (110) :
recevoir des signaux de mesure de fonctionnement (128) de l'unité de réception (114) lorsque l'unité d'émission (112) est activée,
déterminer un niveau de fond actuel et sélectionner, sur la base du niveau de fond actuel, l'une des valeurs seuils de signal de l'ensemble de données d'étalonnage (170), et
identifier comme signal non valide les signaux de sortie (160) dérivés des signaux de mesure de fonctionnement (128) si le signal de sortie respectif (160) est inférieur à la valeur seuil de signal sélectionnée,
dans lequel
le capteur optique (110) est conçu pour être en communication, pendant une phase d'étalonnage précédant la phase de fonctionnement, avec un dispositif d'étalonnage (150) qui comprend une unité d'éclairage (152) qui éclaire l'unité de réception (114) avec l'intensité lumineuse prédéterminée respective à laquelle correspond le niveau de fond respectif, et
l'unité de commande et d'évaluation (116) est en outre conçue pour acquérir, pendant la phase d'étalonnage, pour chaque intensité lumineuse prédéterminée, des signaux de mesure d'étalonnage (154) de l'unité de réception (114), de sorte qu'une unité de traitement (156) soit en mesure de générer l'ensemble de données d'étalonnage (170) à partir des signaux de mesure d'étalonnage (154),
le capteur optique (110) est conçu pour un comptage de photons uniques corrélés dans le temps, TCSPC,
l'unité de commande et d'évaluation (116) est conçue pour générer des histogrammes respectifs du comptage de photons uniques corrélés dans le temps, des histogrammes TCSPC, à la fois pour les signaux de mesure d'étalonnage (154) et pour les signaux de mesure de fonctionnement (128),
l'unité de commande et d'évaluation (116) est en outre conçue pour générer, pendant la phase d'étalonnage du capteur optique (110), une pluralité d'histogrammes TCSPC pour chaque intensité lumineuse prédéterminée, et
l'unité de traitement (156) est conçue pour déterminer, pendant la phase d'étalonnage du capteur optique (110), une valeur de comptage maximale respective (315) pour chacun des histogrammes TCSPC associés à l'intensité lumineuse prédéterminée respective, afin de créer une distribution statistique des valeurs de comptage maximales (315) pour l'intensité lumineuse prédéterminée respective, et pour déterminer les valeurs seuils de signal pour les intensités lumineuses prédéterminées respectives à partir de la distribution statistique.

2. Capteur optique (110) selon la revendication 1,
dans lequel l'unité de traitement (156) est en outre conçue pour, pendant la phase d'étalonnage du capteur optique (110) :
déterminer, à partir de la distribution statistique, une fréquence relative cumulée respective des valeurs de comptage maximales (315) pour chaque intensité lumineuse prédéterminée, et
déterminer les valeurs seuils de signal respectives pour les intensités lumineuses prédéterminées à partir de la fréquence relative cumulée respective.

3. Capteur optique (110) selon la revendication 2,
dans lequel l'unité de traitement (156) est en outre conçue pour utiliser, pendant la phase d'étalonnage du capteur optique (110), au moins un pourcentage prédéfini pour les signaux de sortie faussement positifs (160), afin de déterminer les valeurs seuils de signal respectives pour le niveau de fond associé à partir de la fréquence relative cumulée respective.

4. Capteur optique (110) selon la revendication 2 ou 3,
dans lequel l'unité de traitement (156) est en outre conçue pour utiliser, pendant la phase d'étalonnage du capteur optique (110), plusieurs pourcentages prédéfinis pour les signaux de sortie faussement positifs (160), afin de déterminer, pour chaque pourcentage prédéfini, un ensemble de valeurs seuils de signal respectives pour le niveau de fond associé à partir de la fréquence relative cumulée respective.

5. Capteur optique (110) selon l'une des revendications 1 à 4,
dans lequel l'unité de traitement (156) est en outre conçue pour créer, pendant la phase d'étalonnage du capteur optique (110), l'ensemble de données d'étalonnage (170) sous la forme d'au moins une table de consultation contenant les valeurs seuils de signal respectives et les niveaux de fond associés.

6. Capteur optique (110) selon l'une des revendications 1 à 5,
dans lequel le capteur optique (110) est conçu comme un capteur lidar avec comptage de photons uniques corrélés dans le temps, TCSPC.

7. Capteur optique (110) selon la revendication 6,
dans lequel l'unité de traitement (156) est en outre conçue pour déterminer, pendant la phase d'étalonnage du capteur lidar (110), un ensemble respectif de valeurs seuils de signal pour plusieurs plages de distance à l'intérieur d'une portée du capteur lidar (110).

8. Capteur optique (110) selon l'une des revendications 1 à 7, dans lequel
l'unité de réception (114) du capteur optique (110) comprend plusieurs groupes de pixels,
les groupes de pixels présentent chacun des caractéristiques différentes en termes de bruit, et
l'unité de traitement (156) est en outre conçue pour déterminer, pendant la phase d'étalonnage du capteur optique (110), un ensemble respectif de valeurs seuils de signal pour chaque groupe de pixels.

9. Système de capteur (100) comprenant :
un capteur optique (110) selon l'une des revendications précédentes, et
un dispositif d'étalonnage (150) qui, pendant une phase d'étalonnage du capteur optique (110), est en communication avec le capteur optique et est conçu pour générer l'ensemble de données d'étalonnage (170) pour le capteur optique.

10. Procédé d'étalonnage d'un capteur optique (110) qui comprend une unité d'émission (112) et une unité de réception (114) et qui est en communication avec un dispositif d'étalonnage (150) pendant une phase d'étalonnage, le procédé comprenant les étapes consistant à :
varier l'intensité lumineuse d'une unité d'éclairage (152) du dispositif d'étalonnage (150) du capteur optique (110) de telle sorte que l'unité de réception (114) soit éclairée avec plusieurs intensités lumineuses prédéterminées,
pour chaque intensité lumineuse prédéterminée, acquérir des signaux de mesure d'étalonnage (154) de l'unité de réception (114), déterminer une valeur seuil de signal respective à partir des signaux de mesure d'étalonnage (154), et associer la valeur seuil de signal respective à un niveau de fond pour le capteur optique (110) qui correspond à l'intensité lumineuse prédéterminée respective, et
pour une phase de fonctionnement du capteur optique (110), l'unité d'émission (112) étant activée, fournir les valeurs seuils de signal comme un ensemble de données d'étalonnage (170), de sorte qu'une unité de commande et d'évaluation (116) du capteur optique (110) soit en mesure, pendant la phase de fonctionnement :
de sélectionner l'une des valeurs seuils de signal de l'ensemble de données d'étalonnage (170) sur la base d'un niveau de fond actuel qui est déterminé à partir de signaux de mesure de fonctionnement (128) acquis au moyen de l'unité de réception (114) du capteur optique (110) pendant la phase de fonctionnement, et
d'identifier comme signal non valide des signaux de sortie (160) dérivés des signaux de mesure de fonctionnement (128), l'unité d'émission (112) étant activée, si le signal de sortie respectif (160) est inférieur à la valeur seuil de signal sélectionnée,
sachant que
le capteur optique (110) est conçu pour un comptage de photons uniques corrélés dans le temps, TCSPC,
des histogrammes respectifs du comptage de photons uniques corrélés dans le temps, des histogrammes TCSPC, sont générés à la fois pour les signaux de mesure d'étalonnage (154) et pour les signaux de mesure de fonctionnement (128),
une pluralité d'histogrammes TCSPC respectifs pour les signaux de mesure d'étalonnage (154) sont générés à chaque intensité lumineuse prédéterminée,
pour chacun des histogrammes TCSPC associés à l'intensité lumineuse prédéterminée respective, une valeur de comptage maximale respective (315) est déterminée afin de créer une distribution statistique des valeurs de comptage maximales (315) pour l'intensité lumineuse prédéterminée respective, et
les valeurs seuils de signal pour les intensités lumineuses prédéterminées respectives sont déterminées à partir de la distribution statistique.

11. Procédé selon la revendication 10,
dans lequel
une fréquence relative cumulée respective des valeurs de comptage maximales (315) pour chaque intensité lumineuse prédéterminée est déterminée à partir de la distribution statistique, et
les valeurs seuils de signal respectives pour les intensités lumineuses prédéterminées sont déterminées à partir de la fréquence relative cumulée respective.
